(19) Europäisches Patentamt
European Patent Office
Office européen des brevets

(11) **EP 1 914 926 B1**

(12) **FASCICULE DE BREVET EUROPEEN**

(45) Date de publication et mention
de la délivrance du brevet:
**12.08.2009 Bulletin 2009/33**

(51) Int Cl.:
***H04L 9/32*** *(2006.01)*

(21) Numéro de dépôt: **07017933.8**

(22) Date de dépôt: **13.09.2007**

(54) **Procédé de transmission de données utilisant un code d'accusé de réception comportant des bits d'authentification cachés**

Datenübertragungsverfahren, das einen Empfangsbestätigungscode einsetzt, der verborgene Authentifizierungsbits umfasst

Data transmission method using a code for acknowledgement of receipt containing hidden authentication bits

(84) Etats contractants désignés:
**DE FR GB**

(30) Priorité: **19.10.2006 FR 0609169**

(43) Date de publication de la demande:
**23.04.2008 Bulletin 2008/17**

(73) Titulaire: **STMICROELECTRONICS SA**
**92120 Montrouge (FR)**

(72) Inventeurs:
• **Martinez, Albert**
**13320 BOUC BEL AIR (FR)**
• **Orlando, William**
**13790 Peynier (FR)**

(74) Mandataire: **Marchand, André et al**
**OMNIPAT,**
**24 Place des Martyrs de la Résistance**
**13100 Aix-en-Provence (FR)**

(56) Documents cités:
**WO-A-01/63954**   **WO-A-02/073928**
**GB-A- 2 315 965**   **US-A1- 2002 174 332**

## Description

La présente invention concerne le domaine des transmissions de données sécurisées et plus particulièrement la sécurisation d'accusés de réception envoyés par un dispositif sécurisé en réponse à un message envoyé par un autre dispositif sécurisé.

Le document D1: US 2002/174332 décrit une méthode de transmission d'un message contenant un code d'authentification permettant de vérifier l'intégrité dudit message grâce à un code d'authentification obtenu par chiffrage du message puis troncation.

La présente invention concerne notamment mais non exclusivement la sécurisation d'une transmission de données entre une mémoire effaçable et programmable électriquement, par exemple une mémoire EEPROM ou FLASH, et un dispositif utilisant la mémoire pour y stocker des données.

Divers équipements électroniques, tels des imprimantes, des téléphones mobiles, des PDA (assistants de données personnels) sont susceptibles d'être équipés d'une mémoire sécurisée effaçable et programmable électriquement, pour y mémoriser des données sensibles comme le numéro de série de l'équipement, le numéro de la version du système d'exploitation (OS) de l'équipement, les références des organes techniques ("plate-forme technique") dont l'équipement est pourvu, etc..

La présente invention vise à perfectionner une technique classique de transmission de données sécurisée qui sera brièvement décrite en relation avec les figures 1 et 2. La figure 1 représente très schématiquement une mémoire sécurisée M1 et un dispositif D1 relié à la mémoire M1 par une liaison de données quelconque, par exemple une liaison filaire. La figure 2 est un organigramme se rapportant à des étapes décrites plus loin.

La mémoire M1 et le dispositif D1 sont généralement des circuits intégrés sur microplaquette de semi-conducteur ("chip") et sont pourvus chacun d'un générateur de mots aléatoires RGEN et d'une fonction de cryptographie FKs à clé secrète Ks. Le déroulement d'une communication, ou session, entre le dispositif D1 et la mémoire M1 comprend une phase d'authentification, une phase de détermination d'une clé de session, et une phase de conduite de la session où le dispositif D1 et la mémoire M1 échangent des données.

La phase d'authentification, de préférence une authentification mutuelle, est similaire à celle intervenant par exemple entre une carte à puce et un lecteur de carte à puce. Elle comporte ainsi une phase d'authentification de la mémoire M1 par le dispositif D1 et une phase d'authentification du dispositif D1 par la mémoire M1.

Pour authentifier la mémoire M1, le dispositif D1 génère un mot aléatoire RD1 puis l'envoie à la mémoire M1. La mémoire M1 reçoit le mot aléatoire RD1, le transforme au moyen de sa fonction de cryptographie, puis envoie le résultat FKs(RD1) au dispositif D1. Le dispositif D1 reçoit le résultat FKs(RD1), produit lui-même un résultat FKs(RD1)' au moyen de sa propre fonction de cryptographie, puis compare les deux résultats afin de s'assurer que la mémoire M1 détient la clé secrète Ks.

L'authentification du dispositif D1 par la mémoire M1 est similaire à l'authentification de la mémoire par le dispositif, mais en inversant les "rôles". L'authentification du dispositif D1 fait ainsi intervenir un second mot aléatoire RD2 qui est généré par la mémoire M1.

Une fois ces étapes franchies, le dispositif D1 et la mémoire M1 définissent de concert une clé de session SK. Cette clé de session est par exemple définie à partir des mots aléatoires RD1, RD2 et selon une règle de détermination commune, par exemple une fonction déterministe de génération de clé. Le dispositif D1 et la mémoire M1 peuvent également utiliser une table de clés secrète et choisir chacun la même clé de session dans leurs tables respectives, selon une règle de choix déterminée, par exemple en fonction de la valeur des mots aléatoires RD1, RD2.

La conduite de la session comprend l'envoi de messages par le dispositif D1 et l'envoi d'accusés de réception par la mémoire M1. Les messages sont par exemple des commandes d'écriture, de lecture ou d'effacement de la mémoire, des commandes d'ouverture ou de fermeture de session, etc. Ces messages peuvent ainsi comprendre une adresse d'écriture ou de lecture et des données à écrire. La conduite de la session est sécurisée d'une manière permettant de contrer le piratage de données, l'attaque la plus connue étant l'attaque dite de "l'homme au milieu", ou attaque de l'intercepteur. Selon ce scénario d'attaque, un pirate intercepte et falsifie les échanges afin de se faire passer pour le dispositif D1 ou pour la mémoire M1.

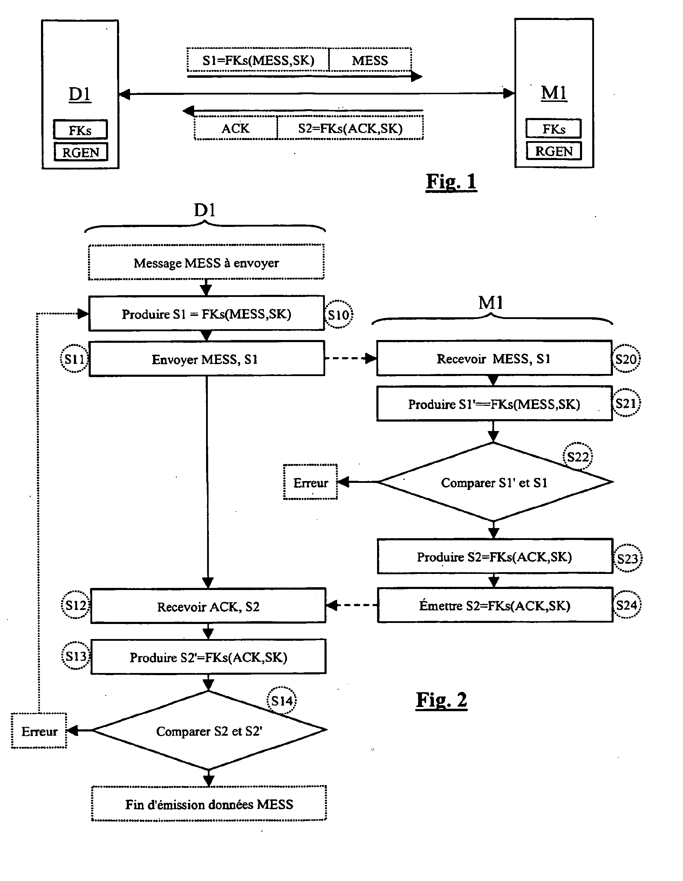

Ainsi, la sécurisation de l'échange de données est assurée en associant à chaque message ou chaque accusé de réception une signature qui authentifie le message ou l'accusé de réception, comme décrit par l'organigramme de la figure 2.

On suppose ici que le dispositif D1 doit envoyer un message MESS à la mémoire M1. Le dispositif D1 utilise sa fonction de cryptographie pour produire une signature S1 (étape S10) du type :

$$S1 = FKs(MESS,SK),$$

qui est obtenue en appliquant à l'entrée de la fonction de cryptographie le message MESS et un paramètre secret ou temporaire comme la clé de session SK. Le message MESS est ensuite envoyé à la mémoire M1 accompagné de la signature S1 (étape S11).

La mémoire reçoit le message MESS (étape S20) et produit au moyen de sa propre fonction de cryptographie une signature interne S1' (étape S21) du type :

$$S1' = FKs(MESS, SK),$$

qui est donc, en principe, identique à la signature S1.

La mémoire compare ensuite les signatures S1 et S1' (étape S22) pour authentifier le message reçu. Si les deux signatures sont identiques, la mémoire exécute la commande contenue dans le message (étape non représentée) et se prépare ensuite à émettre un accusé de réception ACK pour attester de la bonne réception du message ainsi que sa bonne exécution (lorsque le message est une commande d'écriture par exemple ; dans le cas d'une commande de lecture la réponse consistera plutôt dans l'envoi des données lues accompagnées d'une signature).

A cet effet, la mémoire M1 utilise de nouveau sa fonction de cryptographie pour produire une signature S2 (étape S23) à partir de l'accusé de réception ACK et de la clé de session SK, la signature S2 étant ainsi du type

$$S2 = FKs(ACK, SK).$$

L'accusé de réception ACK est ensuite envoyé au dispositif D1 accompagné de la signature S2 (étape S24).

Le dispositif D1 reçoit l'accusé de réception ACK et la signature S2 (étape S12) et utilise de nouveau sa fonction de cryptographie pour produire une signature interne S2' (étape S13) du type :

$$S2' = FKs(ACK, SK),$$

qui est donc, en principe, identique à la signature S2.

Le dispositif D1 compare ensuite les signatures S2 et S2' pour authentifier l'accusé de réception reçu (étape S14). Si les deux signatures sont identiques, le message MESS est considéré comme reçu et, selon la nature du message, comme exécuté (message d'écriture par exemple).

Ce procédé classique, bien qu'indispensable pour contrer le piratage, s'avère contraignant car il nécessite de conduire deux étapes de calcul cryptographique dans le dispositif D1 et deux étapes de calcul cryptographique dans la mémoire M1. Plus précisément, chaque dispositif D1, M1 effectue un calcul cryptographique à chaque transmission d'un message et un calcul cryptographique à chaque transmission d'un accusé de réception. Les calculs cryptographiques n'étant pas instantanés et nécessitant l'application d'un nombre non négligeable de cycles d'horloge au circuit exécutant la fonction de cryptographie, ils ralentissent l'échange de données. Cela est particulièrement le cas lorsque l'on utilise des circuits de cryptographie qui sont "optimisés" en termes de surface de silicium occupée et/ou en termes de prix de revient. De tels circuits présentent des performances volontairement limitées, parfois même dégradées, pour répondre à des contraintes d'encombrement et/ou de coût. Le nombre de cycles d'horloge qu'ils nécessitent pour produire un code de cryptographie peut être sensiblement augmenté par rapport à des circuits optimisés en termes de performances. Dans ce cas, il est particulièrement souhaitable de réduire le nombre de calculs cryptographiques.

La présente invention vise ainsi un procédé de sécurisation d'une transmission de données qui soit robuste en termes de sécurité mais qui nécessite moins de calculs cryptographiques.

Pour atteindre cet objectif, la présente invention propose d'utiliser un code de cryptographie unique pour signer un message et pour former l'accusé de réception correspondant. A cet effet, la longueur du code de cryptographie est prévue supérieure à celle de la signature. De ce fait, tous les bits du code de cryptographie ne sont pas utilisés pour signer le message. Les bits non utilisés forment des bits cachés et sont utilisés pour former l'accusé de réception du message.

Plus particulièrement, la présente invention prévoit un procédé d'émission de données, comprenant des étapes consistant à produire, à partir de données à émettre, un code d'authentification comprenant des bits d'authentification, émettre les données et une signature comprenant des bits d'authentification du code d'authentification, recevoir un accusé de réception, et vérifier l'authenticité de l'accusé de réception, dans lequel la longueur du code d'authentification est supérieure à la longueur de la signature, le code d'authentification comprenant des bits cachés qui ne sont pas insérés dans la signature, et l'authenticité de l'accusé de réception est déterminée en vérifiant que des bits d'authentification cachés se trouvent dans l'accusé de réception.

Selon un mode de réalisation, l'authenticité de l'accusé de réception est déterminée en vérifiant que tous les bits cachés se trouvent dans l'accusé de réception.

Selon un mode de réalisation, l'authenticité de l'accusé de réception est déterminée en vérifiant que des bits cachés se trouvent dans l'accusé de réception dans un ordre correspondant à leur ordre initial dans le code d'authentification ou dans un ordre inversé par rapport à leur ordre initial.

Selon un mode de réalisation, l'authenticité de l'accusé de réception est déterminée en vérifiant que tout ou partie des bits cachés se trouve dans l'accusé de réception dans un ordre entrelacé déterminé par une fonction d'entrelacement, par rapport à leur ordre initial dans le code d'authentification.

Selon un mode de réalisation, l'authenticité de l'accusé de réception est déterminée en vérifiant également que des bits d'authentification présents dans la signature se trouvent dans l'accusé de réception.

Selon un mode de réalisation, le code d'authentification est produit à partir des données à émettre et d'au moins une clé de session secrète.

Selon un mode de réalisation, le procédé comprend les étapes consistant à produire un accusé de réception interne en utilisant les bits d'authentification cachés du code d'authentification, et déterminer l'authenticité de l'accusé de réception reçu en le comparant à l'accusé de réception interne.

La présente invention concerne également un procédé de réception de données, comprenant des étapes consistant à recevoir des données et une signature comprenant des bits d'authentification, produire, à partir des données reçues, un code d'authentification comprenant des bits d'authentification, et produire et émettre un accusé de réception, dans lequel la longueur du code d'authentification est supérieure à la longueur de la signature, le code d'authentification comprenant des bits d'authentification cachés qui ne sont pas présents dans la signature, et l'accusé de réception est produit sans produire un nouveau code d'authentification, en utilisant les bits d'authentification cachés du code d'authentification.

Selon un mode de réalisation, tous les bits cachés du code d'authentification sont insérés dans l'accusé de réception.

Selon un mode de réalisation, tout ou partie des bits cachés du code d'authentification est inséré dans l'accusé de réception, dans un ordre correspondant à leur ordre initial dans le code d'authentification ou dans un ordre inversé par rapport à leur ordre initial.

Selon un mode de réalisation, tout ou partie des bits cachés est inséré dans l'accusé de réception dans un ordre entrelacé déterminé par une fonction d'entrelacement, par rapport à leur ordre initial dans le code d'authentification.

Selon un mode de réalisation, une partie des bits d'authentification présents dans la signature est également insérée dans l'accusé de réception.

Selon un mode de réalisation, le code d'authentification est produit à partir des données reçues et d'au moins une clé de session secrète.

Selon un mode de réalisation, le procédé comprend une étape de vérification de l'authenticité de la signature reçue en utilisant le code d'authentification.

La présente invention concerne également un procédé de transmission de données entre un point A et un point B, comprenant les étapes consistant à produire au point A, à partir de données à transmettre, un premier code d'authentification comprenant des bits d'authentification, transmettre, du point A au point B, les données et une signature comprenant des bits d'authentification du code d'authentification, produire au point B, à partir des données reçues, un second code d'authentification présumé identique au premier, produire au point B un accusé de réception, transmettre du point B au point A l'accusé de réception, et vérifier au point A l'authenticité de l'accusé de réception reçu, dans lequel la longueur du premier code d'authentification est supérieure à la longueur de la signature, le premier code d'authentification comprenant des bits d'authentification cachés qui ne sont pas insérés dans la signature, le second code d'authentification comprend également des bits cachés supposés identiques aux bits cachés du premier code d'authentification, l'accusé de réception est produit en utilisant des bits d'authentification cachés du second code d'authentification, et l'authenticité de l'accusé de réception est déterminée au point A en vérifiant que des bits d'authentification cachés du premier code d'authentification se trouvent dans l'accusé de réception.

Selon un mode de réalisation, tous les bits cachés du second code d'authentification sont insérés dans l'accusé de réception, et l'authenticité de l'accusé de réception est déterminée au point A en vérifiant que tous les bits cachés du premier code d'authentification se trouvent dans l'accusé de réception.

Selon un mode de réalisation, tout ou partie des bits cachés du second code d'authentification est inséré dans l'accusé de réception, dans un ordre correspondant à leur ordre initial dans le second code d'authentification ou dans un ordre inversé par rapport à leur ordre initial, et l'authenticité de l'accusé de réception est déterminée au point A en vérifiant que des bits cachés du premier code d'authentification se trouvent dans l'accusé de réception dans un ordre correspondant à leur ordre initial dans le premier code d'authentification ou dans un ordre inversé par rapport à leur ordre initial.

Selon un mode de réalisation, tout ou partie des bits cachés du second code d'authentification est inséré dans l'accusé de réception dans un ordre entrelacé déterminé par une fonction d'entrelacement, par rapport à leur ordre initial dans le second code d'authentification, et l'authenticité de l'accusé de réception est déterminée au point A en vérifiant que tout ou partie des bits cachés du premier code d'authentification se trouve dans l'accusé de réception dans un ordre entrelacé déterminé par ladite fonction d'entrelacement, par rapport à leur ordre initial dans le premier code d'authentification.

Selon un mode de réalisation, une partie des bits d'authentification présents dans la signature est également insérée dans l'accusé de réception, et l'authenticité de l'accusé de réception est déterminée en vérifiant également que les bits d'authentification de la signature se trouvent dans l'accusé de réception.

Selon un mode de réalisation, le premier code d'authentification est produit à partir des données à transmettre et d'au moins une clé de session secrète connue au point A et connue au point B.

Selon un mode de réalisation, le procédé comprend une étape de vérification de l'authenticité de la signature reçue au point B en utilisant le second code d'authentification.

Selon un mode de réalisation, le procédé comprend les étapes consistant à produire au point A un accusé de réception interne en utilisant les bits d'authentification cachés du premier code d'authentification, et déterminer au point A l'authenticité de l'accusé de réception reçu en le comparant à l'accusé de réception interne.

La présente invention concerne également un dispositif d'émission de données comprenant des moyens de traitement de données et des moyens de communication pour produire, à partir de données à émettre, un code d'authentification comprenant des bits d'authentification, émettre les données et une signature comprenant des bits d'authentification du code d'authentification, recevoir un accusé de réception de données, et vérifier l'authenticité de l'accusé de réception, dans lequel les moyens de traitement de données sont agencés pour produire le code d'authentification de manière que la longueur du code d'authentification soit supérieure à la longueur de la signature, et n'insérer dans la signature qu'une partie des bits d'authentification, les autres bits du code d'authentification formant des bits cachés, et déterminer l'authenticité de l'accusé de réception en vérifiant que des bits d'authentification cachés se trouvent dans l'accusé de réception.

Selon un mode de réalisation, les moyens de traitement de données sont agencés pour vérifier que tous les bits cachés se trouvent dans l'accusé de réception.

Selon un mode de réalisation, les moyens de traitement de données sont agencés pour vérifier que des bits cachés se trouvent dans l'accusé de réception dans un ordre correspondant à leur ordre initial dans le code d'authentification ou dans un ordre inversé par rapport à leur ordre initial.

Selon un mode de réalisation, les moyens de traitement de données sont agencés pour vérifier que tout ou partie des bits cachés se trouve dans l'accusé de réception dans un ordre entrelacé déterminé par une fonction d'entrelacement, par rapport à leur ordre initial dans le code d'authentification.

Selon un mode de réalisation, les moyens de traitement de données sont agencés pour vérifier également que des bits d'authentification présents dans la signature se trouvent dans l'accusé de réception.

Selon un mode de réalisation, les moyens de traitement de données sont agencés pour produire le code d'authentification à partir des données à émettre et d'au moins une clé de session secrète.

Selon un mode de réalisation, les moyens de traitement de données sont agencés pour produire un accusé de réception interne en utilisant les bits d'authentification cachés du premier code d'authentification, et déterminer l'authenticité de l'accusé de réception reçu en le comparant à l'accusé de réception interne.

La présente invention concerne également un dispositif de réception de données comprenant des moyens de traitement de données et de communication pour recevoir des données et une signature comprenant des bits d'authentification, produire, à partir des données reçues, un code d'authentification comprenant des bits d'authentification, et produire et émettre un accusé de réception, dans lequel les moyens de traitement de données sont agencés pour produire le code d'authentification de manière que le code d'authentification soit d'une longueur supérieure à la longueur de la signature et comprenne des bits d'authentification cachés qui ne sont pas présents dans la signature, et produire l'accusé de réception sans produire un nouveau code d'authentification, en utilisant les bits d'authentification cachés du code d'authentification.

Selon un mode de réalisation, les moyens de traitement de données sont agencés pour insérer dans l'accusé de réception tous les bits cachés du code d'authentification.

Selon un mode de réalisation, les moyens de traitement de données sont agencés pour insérer tout ou partie des bits cachés du code d'authentification dans l'accusé de réception, dans un ordre correspondant à leur ordre initial dans le code d'authentification ou dans un ordre inversé par rapport à leur ordre initial.

Selon un mode de réalisation, les moyens de traitement de données sont agencés pour insérer tout ou partie des bits cachés dans l'accusé de réception, dans un ordre entrelacé déterminé par une fonction d'entrelacement par rapport à leur ordre initial dans le code d'authentification.

Selon un mode de réalisation, les moyens de traitement de données sont agencés pour insérer également dans l'accusé de réception une partie des bits d'authentification présents dans la signature.

Selon un mode de réalisation, les moyens de traitement de données sont agencés pour produire le code d'authentification à partir des données reçues et d'au moins une clé de session secrète.

Selon un mode de réalisation, les moyens de traitement de données sont agencés pour vérifier l'authenticité de la signature reçue en utilisant le code d'authentification.

La présente invention concerne également un système de transmission de données entre un point A et un point B, comprenant des moyens de traitement de données et de communication pour produire au point A, à partir de données à transmettre, un premier code d'authentification comprenant des bits d'authentification, transmettre, du point A au point B, les données et une signature comprenant des bits d'authentification du code d'authentification, produire au point B, à partir des données reçues, un second code d'authentification présumé identique au premier, produire au point B un accusé de réception, transmettre du point B au point A l'accusé de réception, et vérifier au point A l'authenticité de l'accusé de réception reçu, dans lequel les moyens de traitement de données sont agencés pour produire le premier code d'authentification au point A de manière que la longueur du premier code d'authentification soit supérieure à la longueur de la signature, le premier code d'authentification comprenant des bits d'authentification cachés qui ne sont pas insérés dans la signature, produire le second code d'authentification de manière que le second code d'authentification comprenne également des bits cachés supposés identiques aux bits cachés du premier code d'authentification, produire l'accusé de réception en utilisant des bits d'authentification cachés du second code d'authentification, et déterminer l'authenticité de l'accusé de réception au point A en vérifiant que des bits d'authentification cachés du premier code d'authentification se trouvent dans l'accusé de réception.

Selon un mode de réalisation, les moyens de traitement de données sont agencés pour insérer dans l'accusé de réception tous les bits cachés du second code d'authentification, et déterminer l'authenticité de l'accusé de réception au point A en vérifiant que tous les bits cachés du premier code d'authentification se trouvent dans l'accusé de réception.

Selon un mode de réalisation, les moyens de traitement de données sont agencés pour insérer tout ou partie des bits cachés du second code d'authentification dans l'accusé de réception, dans un ordre correspondant à leur ordre initial dans le second code d'authentification ou dans un ordre inversé par rapport à leur ordre initial, et déterminer l'authenticité de l'accusé de réception au point A en vérifiant que des bits cachés du premier code d'authentification se trouvent dans l'accusé de réception dans un ordre correspondant à leur ordre initial dans le premier code d'authentification ou dans un ordre inversé par rapport à leur ordre initial.

Selon un mode de réalisation, les moyens de traitement de données sont agencés pour insérer tout ou partie des bits cachés du second code d'authentification dans l'accusé de réception dans un ordre entrelacé déterminé par une fonction d'entrelacement, par rapport à leur ordre initial dans le second code d'authentification, et déterminer l'authenticité de l'accusé de réception au point A en vérifiant que tout ou partie des bits cachés du premier code d'authentification se trouve dans l'accusé de réception dans un ordre entrelacé déterminé par ladite fonction d'entrelacement, par rapport à leur ordre initial dans le premier code d'authentification.

Selon un mode de réalisation, les moyens de traitement de données sont agencés pour insérer également dans l'accusé de réception une partie des bits d'authentification présents dans la signature, et déterminer l'authenticité de l'accusé de réception en vérifiant également que les bits d'authentification de la signature se trouvent dans l'accusé de réception.

Selon un mode de réalisation, les moyens de traitement de données sont agencés pour produire la signature à partir des données à transmettre et d'au moins une clé de session secrète connue au point A et connue au point B.

Selon un mode de réalisation, les moyens de traitement de données sont agencés pour vérifier l'authenticité de la signature reçue au point B en utilisant le second code d'authentification.

Selon un mode de réalisation, les moyens de traitement de données sont agencés pour produire au point A un accusé de réception interne en utilisant les bits d'authentification cachés du premier code d'authentification, et déterminer au point A l'authenticité de l'accusé de réception reçu en le comparant à l'accusé de réception interne.

Ces objets, caractéristiques et avantages ainsi que d'autres de la présente invention seront exposés plus en détail dans la description suivante du procédé selon l'invention, faite à titre non limitatif en relation avec les figures jointes parmi lesquelles :

- la figure 1 précédemment décrite représente schématiquement un dispositif et une mémoire mettant en oeuvre un procédé classique de signature de message et d'accusé de réception,
- la figure 2 précédemment décrite est un organigramme décrivant des étapes du procédé classique de signature de message et d'accusé de réception,
- la figure 3 représente schématiquement un dispositif et une mémoire mettant en oeuvre le procédé de signature de message et d'accusé de réception selon l'invention,
- la figure 4 est un organigramme décrivant des étapes du procédé selon l'invention,
- la figure 5 représente un exemple de réalisation d'un dispositif à logique câblée mettant en oeuvre le procédé selon l'invention,
- la figure 6 représente sous forme de blocs un autre exemple de réalisation d'un dispositif et un exemple de réalisation d'une mémoire mettant en oeuvre le procédé de l'invention.

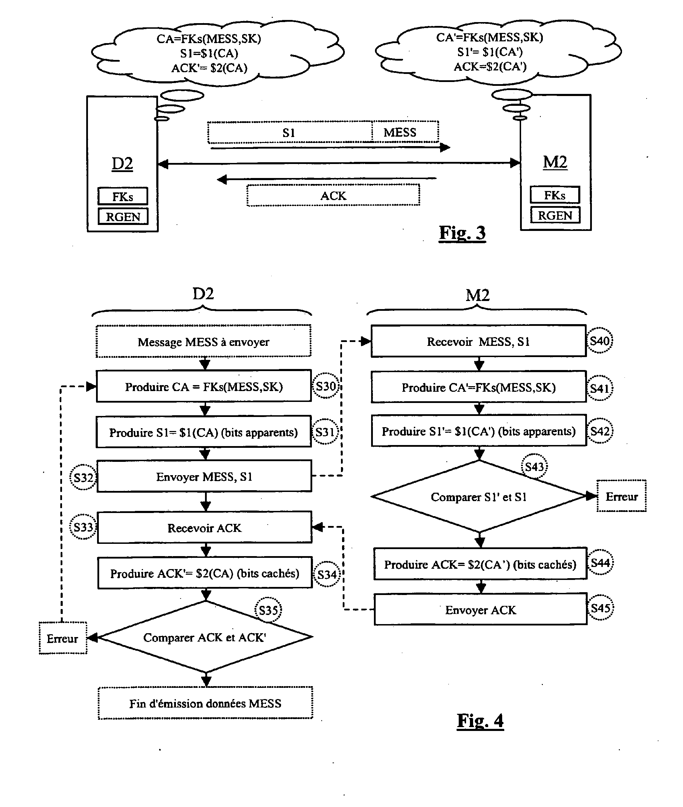

La figure 3 représente un dispositif D2 et une mémoire M2 selon l'invention en train d'échanger des données par l'intermédiaire d'une ligne de transmission de données quelconque, filaire ou sans contact (liaison radioélectrique, liaison par couplage inductif RF, liaison par couplage radioélectrique UHF, etc.).

Le dispositif D2 et la mémoire M2 sont des composants sur microplaquette de semi-conducteur pourvus chacun d'un générateur aléatoire RGEN et d'une fonction de cryptographie FKs à clé secrète Ks, et détiennent chacun la même clé secrète Ks. On suppose ici que les deux composants se sont authentifiés, de préférence mutuellement, de la manière décrite plus haut, et ont choisi une clé de session SK commune. On suppose également que le dispositif D2 doit maintenant envoyer à la mémoire M2 un message MESS accompagné d'une signature S1, et que la mémoire M2 doit renvoyer un accusé de réception ACK.

Le procédé selon l'invention concerne essentiellement la production de l'accusé de réception ACK et prévoit que celui-ci est produit à partir d'un code d'authentification CA utilisé pour produire la signature S1, sans qu'il soit nécessaire de produire un second code d'authentification, comme cela est le cas dans l'art antérieur (Cf. étape S13, S23, figure 2). Les principales étapes du procédé selon l'invention sont décrites par l'organigramme en figure 4.

Le dispositif D2 produit tout d'abord un code d'authentification CA (étape S30) d'une longueur (nombre de bits) supérieure à la longueur de la signature S1 devant être transmise avec le message MESS. Le code d'authentification CA est produit de façon en soi classique, en utilisant le message MESS et la clé de session SK comme données d'entrée de la fonction de cryptographie. Le code d'authentification est ainsi du type :

$$CA = FKs(MESS,SK)$$

La fonction de cryptographie est par exemple un algorithme AES-CMAC basé sur l'AES (Advanced Encryption System), avec chiffrement des données d'entrée par blocs de 128 bits.
Une fonction de troncature $1 est ensuite appliquée par le dispositif D2 au code d'authentification CA (étape S31), pour obtenir la signature S1, qui est ainsi du type

$$S1=\$1(CA)$$

Cette fonction de troncature supprime - ou plutôt met de côté - un certain nombre de bits du code CA, par exemple des bits de plus faible poids, de manière que la longueur de la signature S1 corresponde à la longueur attribuée au champ de signature du message. Cette longueur est définie par le format des trames de communication et dépend du protocole de communication.
Une fois la signature S1 produite, le dispositif D2 envoie à la mémoire M2 le message MESS accompagné de la signature S1 (étape S31). La mémoire M2 reçoit le message et la signature (étape S40) et produit ensuite (étape S41) un code d'authentification CA' en appliquant la même méthode que le dispositif D2, soit :

$$CA' = FKs(MESS,SK)$$

La mémoire M2 et le dispositif D2 utilisant la même fonction cryptographique et la même clé secrète, le code CA' est supposé identique au code CA, en l'absence de piratage et si le message MESS n'a pas été corrompu pour d'autres raisons entre l'instant de son émission et l'instant de sa réception.
La mémoire M2 produit ensuite une signature interne S1' supposée identique à la signature S1 reçue, en appliquant la fonction de troncature $1 au code d'authentification CA' (étape S42), soit :

$$S1'=\$1(CA')$$

La mémoire compare ensuite les signatures S1 et S1'. Si la comparaison est positive, la mémoire produit un accusé de réception ACK (étape S44). Selon l'invention, l'accusé de réception ACK est produit en utilisant les bits cachés du code CA', soit les bits non utilisés par la fonction de troncature $1, qui n'ont pas été transmis en clair sur la ligne de transmission de données reliant le dispositif D2 et la mémoire M2. Par exemple, l'accusé de réception est produit en appliquant au code CA' une fonction de troncature $2 qui est le complément à N de la fonction de troncature $1, N étant le nombre de bits du code CA'. Dans ce cas, la fonction $2 sélectionne les bits écartés par la fonction $1 et rejette les bits utilisés par la fonction $1. L'accusé de réception est ainsi du type :

$$ACK = \$2(CA')$$

Cette étape de production de l'accusé de réception ACK, basée sur l'utilisation de bits cachés, est susceptible de diverses variantes de réalisation. Ainsi, la fonction $2 peut "recouvrir" la fonction $1, c'est-à-dire sélectionner un ensemble de bits comprenant des bits cachés et des bits non cachés (soit des bits déjà présents dans la signature S1) pour produire la signature ACK. Inversement, la fonction $2 peut ne pas utiliser tous les bits cachés, et n'utiliser qu'une partie de ceux-ci (par exemple un nombre déterminé de sous-groupes de bits). La fonction de troncature selon l'invention peut également intégrer une fonction d'inversion des bits par rapport à leur ordre initial ou intégrer une fonction d'entrelacement des bits cachés pour former une chaîne de bits entrelacés. Le cas échéant, l'entrelacement peut être fait sans incorporation des bits non cachés, ou avec incorporation de tout ou partie des bits non cachés. De façon générale, l'homme de l'art peut prévoir divers types de fonctions de troncature avec ou sans entrelacement utilisant des bits cachés du code d'authentification CA' pour produire un accusé de réception selon l'invention.
La mémoire M2 envoie ensuite l'accusé de réception ACK au dispositif D2 (étape S45). L'accusé de réception peut être envoyé seul, comme décrit dans l'organigramme de la figure 4, ou être précédé du message MESS reçu, lequel est alors également renvoyé au dispositif D2 (méthode de l'écho). L'homme de l'art peut également prévoir des codes d'accusé de réception spécifiques et différentiateurs (c'est à dire choisis en fonction du message reçu et/ou porteurs d'une information spécifique) qui sont chacun accompagné de l'accusé de réception ACK selon l'invention, lequel forme alors une sorte de signature attestant de l'authenticité des codes d'accusé de réception.
Après réception de l'accusé de réception ACK (étape S33), le dispositif M2 produit lui-même un accusé de réception interne ACK' (étape S34). L'accusé de réception interne est produit à partir du code CA que le dispositif M2 avait initialement calculé, en utilisant la même fonction de troncature $2 que la mémoire M2, soit :

$$ACK' = \$2(CA)$$

Le dispositif D2 compare ensuite (étape S35) l'accusé de réception reçu ACK et l'accusé de réception interne ACK' pour s'assurer que le message MESS a bien été reçu et, selon le type de message, bien été exécuté (message d'écriture par exemple).

Cette étape de comparaison revient finalement à vérifier que les bits cachés se trouvent dans l'accusé de réception dans un ordre correspondant à leur ordre initial dans le code d'authentification, ou dans un ordre inversé par rapport à leur ordre initial, ou encore dans un ordre entrelacé déterminé par la fonction d'entrelacement qui est incluse dans la fonction de troncature $2. Cette étape de comparaison revient également à vérifier que des bits non cachés de rang déterminé se trouvent également dans l'accusé de réception, si la fonction de troncature $2 "recouvre" la fonction de troncature $1 et réutilise tout ou partie des bits déjà utilisés par la fonction $1 pour former la signature S1.

Si le résultat de la comparaison est négatif, le dispositif D2 réitère les étapes S30 à S32 pour produire un nouveau code d'authentification CA, produire une nouvelle signature S1 et envoyer de nouveau le message MESS.

Le procédé selon l'invention est également susceptible de diverses variantes en ce qui concerne la production de la signature S1. Par exemple, au lieu de produire les codes CA et CA' uniquement à partir du message MESS et de la clé de session SK, une variable CMPT, CMPT' peut être ajoutée aux données d'entrée de la fonction cryptographique FKs. Dans ce cas les codes CA, CA' sont du type :

$$CA = FKs(MESS,CMPT,SK)$$

$$CA' = FKs(MESS,CMPT',SK)$$

La variable CMPT, CMPT' est par exemple une valeur de comptage évoluant dans un sens déterminé, croissant ou décroissant. La variable CMPT est produite au moyen d'un compteur agencé dans le dispositif D2 et la variable CMPT', supposée identique à la variable CMPT, est produite au moyen d'un compteur agencé dans la mémoire M2. La variable CMPT est incrémentée d'une unité par le dispositif D2 à chaque envoi d'un message et la variable CMPT' est incrémentée d'une unité par la mémoire M2 à chaque réception d'un message. L'insertion de cette variable dans les données d'entrées utilisées pour produire les codes CA, CA' permet de contrer des attaques de type "re-jeu" (ou "replay") qui consistent à réémettre une commande accompagnée d'une signature valable. Ainsi, par exemple, si la mémoire M2 constate à l'étape S35 que l'accusé de réception reçu ACK n'est pas valable et retourne à l'étape S30 pour produire un nouveau code d'authentification CA, le nouveau code d'authentification CA n'est pas égal au précédent bien que le message MESS soit le même car la variable CMPT a été incrémentée entre l'étape S35 et le retour à l'étape S30.

Il sera par ailleurs noté que l'accusé de réception interne ACK' peut être produit par le dispositif D2 au moment de la production de la signature S1, au lieu d'être produit après réception de l'accusé de réception ACK. L'accusé de réception interne ACK' est alors mémorisé jusqu'à réception de l'accusé de réception ACK et la comparaison des deux accusés de réception peut être faite immédiatement.

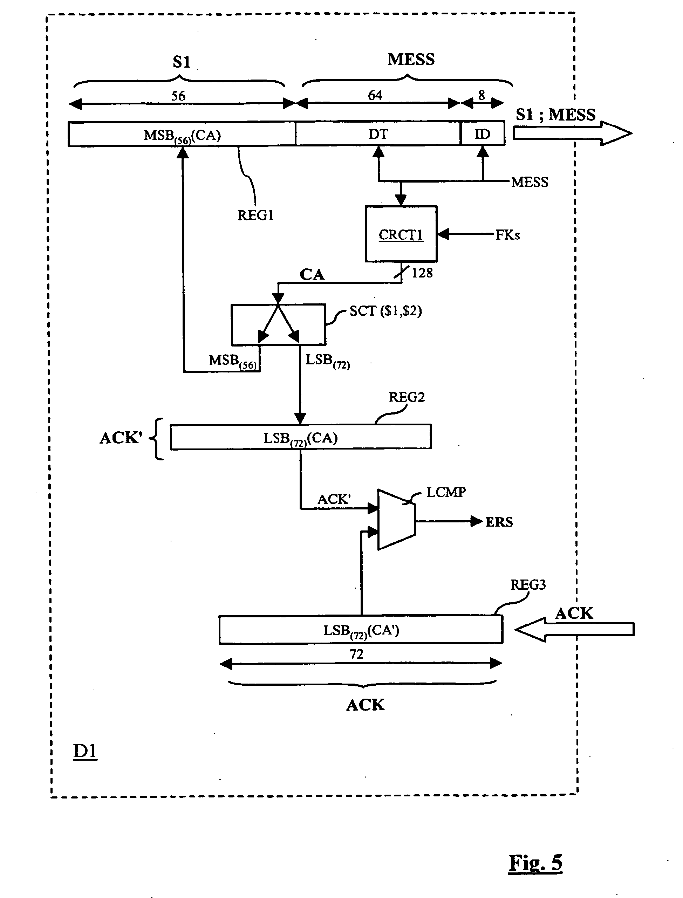

La figure 5 montre la mise en oeuvre du procédé selon l'invention dans le dispositif D2 au moyen d'un circuit à logique câblée. Le dispositif D2 comprend un circuit de cryptographie CRCT1, un circuit séparateur SCT, un registre de sortie REG1 de 128 bits à entrée parallèle et sortie série, un registre intermédiaire REG2 de 72 bits à entrée/sortie parallèle, un registre d'entrée REG3 de 72 bits à entrée série et sortie parallèle, et un comparateur logique LCMP ayant deux entrées parallèles de 72 bits chacune.

Le registre REG1 comprend une zone de 72 bits pour recevoir un message MESS à émettre et une zone de 56 bits pour recevoir la signature S1 accompagnant le message. Le message comprend ici un identifiant ID de 8 bits et un champ de données DT de 64 bits. L'identifiant ID est par exemple une commande destinée à la mémoire M2 (commande de lecture, d'écriture, d'effacement global...) et les données DT contiennent par exemple une adresse d'écriture ou de lecture de la mémoire M2 et éventuellement des données à écrire.

Le circuit CRCT1 est par exemple un circuit AES-CMAC, comme indiqué plus haut, avec chiffrement des données d'entrée par blocs de 128 bits à partir de la clé secrète Ks. Sa sortie de 128 bits fournit le code d'authentification CA à l'entrée du circuit séparateur SCT. Le circuit séparateur SCT réalise simultanément les fonctions de troncature $1 et $2 en séparant les 56 bits MSB du code CA (bits de plus fort poids) pour former la signature S1, et les 72 bits LSB (bits de plus faible poids) du code CA pour former l'accusé de réception interne ACK'. Le circuit SCT comporte ainsi ici une sortie de 56 bits et une sortie de 72 bits. La sortie de 56 bits est reliée à une entrée du registre REG1 correspondant à la zone de 56 bits dédiée à la signature S1. La sortie de 72 bits est reliée à l'entrée du registre intermédiaire REG2, utilisé pour mémoriser l'accusé de réception interne ACK'. La sortie du registre REG2 est reliée à une entrée du comparateur LCMP et l'autre entrée du comparateur est reliée à la sortie parallèle du registre REG3.

Le message MESS est tout d'abord chargé dans la zone de 72 bits du registre REG1 et est appliqué simultanément à l'entrée du circuit CRCT1. Ce dernier est ensuite activé et fournit le code CA au circuit séparateur SCT qui fournit alors la signature S1 et l'accusé de réception interne ACK'. La signature S1 est chargée dans la zone de 56 bits du registre REG1 et l'accusé de réception interne est chargé dans le registre intermédiaire REG2. Le registre REG1 est ensuite commandé pour envoyer bit à bit le message MESS et la signature S1 à la mémoire M2 (non représentée).

L'accusé de réception ACK renvoyé par la mémoire M2 est reçu bit à bit par le registre REG3, par l'intermédiaire de son entrée série. Lorsque le registre REG3 est plein, le contenu du registre est appliqué sur la seconde entrée du comparateur LCMP. La sortie du comparateur fournit un signal d'erreur ERS qui passe par exemple à 1 si les accusés de réception ACK, ACK' ne sont pas identiques.

Conformément aux variantes décrites plus haut concernant la production de l'accusé de réception ACK, le circuit séparateur peut inclure une fonction d'entrelacement des bits LSB fournis au registre REG2. Egalement, des bits MSB (bits non cachés) peuvent être injectés et mélangés aux bits LSB fournis au registre REG2. Un entrelacement de tout ou partie des bits MSB et de tout ou partie des bits LSB peut également être prévu pour produire la signature S1.

Il apparaîtra clairement à l'homme de l'art qu'un circuit à logique câblée similaire peut être prévu dans la mémoire M2 pour exécuter les étapes correspondantes du procédé de l'invention. Par ailleurs, une telle structure de circuit à logique câblée peut comprendre un registre de sortie à sortie parallèle et un registre d'entrée à entrée parallèle, si la liaison de données entre la mémoire et le dispositif est de type parallèle.

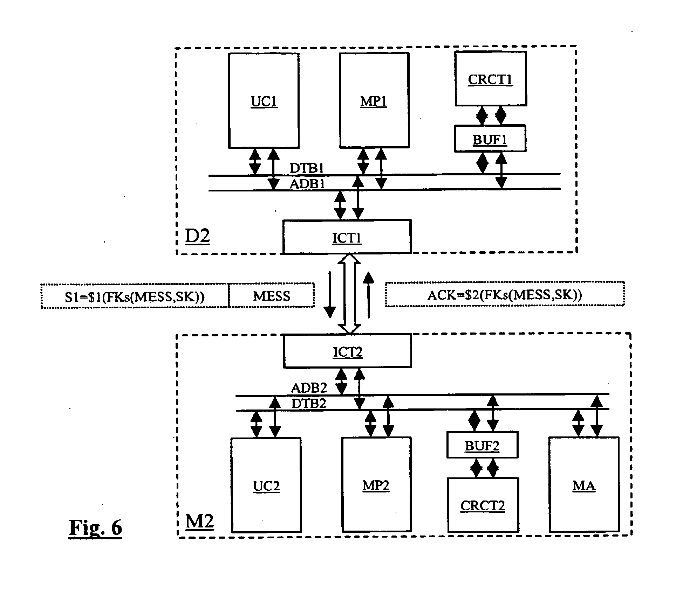

La figure 6 représente un autre exemple d'architecture du dispositif D2 et de la mémoire M2. L'architecture représentée ici est une architecture à bus de données et à bus d'adresse offrant diverses possibilités d'implémentàtion du procédé selon l'invention.

Le dispositif D2 comprend une unité centrale UC1, une mémoire programme MP1, le circuit CRCT1 déjà décrit et un circuit d'interface de communication ICT1 filaire ou non filaire. Ces éléments sont reliés à un bus de données DTB1 et un bus d'adresse ADB1. Le circuit CRCT1 est relié aux bus DTB1, ADB1 par l'intermédiaire d'un circuit tampon BUF1 permettant de convertir le bloc d'authentification de 128 bits fourni par le circuit CRCT1 en plusieurs blocs de données d'une longueur compatible avec la taille du bus de données (par exemple 16 ou 32 bits).

La mémoire M2 comprend une unité centrale UC2 à microprocesseur ou à logique câblée (séquenceur préprogrammé pour exécuter des commandes), une mémoire programme MP2, un circuit de cryptographie CRCT2 similaire au circuit CRCT1, un circuit d'interface de communication ICT2, filaire ou non, et un plan mémoire MA de type effaçable et programmable électriquement (par exemple EEPROM ou FLASH). Ces éléments sont reliés à un bus de données DTB2 et un bus d'adresse ADB2. Le circuit CRCT2 est relié aux bus DTB2, ADB2 par l'intermédiaire d'un circuit tampon BUF2 permettant de convertir le bloc d'authentification de 128 bits fourni par le circuit CRCT2 en blocs de données d'une longueur compatible avec la taille du bus de données.

Le dispositif D2 et la mémoire M2 communiquent par l'intermédiaire des circuits d'interface ICT1, ICT2, pour échanger des messages MESS (notamment des commandes d'écriture ou de lecture du plan mémoire MA) et des accusés de réception ACK correspondants. Les unités centrales UC1, UC2 assurent la génération de nombres aléatoires pour l'authentification mutuelle ainsi que l'exécution des fonctions de troncature $1, $2, à partir des codes d'authentification CA, CA' fournis par les circuits CRCT1, CRCT2. Toutefois, ces fonctionnalités pourraient également être confiées à des circuits dédiés (non représentés), à savoir un générateur aléatoire et un circuit de troncature reliés aux bus de données et d'adresse et accessibles comme des périphériques usuels.

Il apparaîtra clairement à l'homme de l'art que la présente invention n'est aucunement limitée à l'application qui vient d'être décrite et concerne de façon générale la sécurisation de communications entre dispositifs équipés de moyens de communication, les messages MESS n'étant pas nécessairement des commandes destinées à une mémoire. Par exemple, le dispositif M2 appelé "mémoire" dans ce qui précède devient un dispositif d'émission-réception de données "lambda" si son plan mémoire MA est supprimé ou s'il n'est prévu que pour les besoins internes du dispositif. Ainsi, la description qui précède concerne de façon générale la sécurisation d'une transmission de données entre deux dispositifs. La présente invention peut par exemple être mise en oeuvre pour sécuriser une transmission de données entre une carte à puce et un lecteur de carte à puce.

Il apparaîtra également à l'homme de l'art que les moyens de mise en oeuvre de l'invention ne sont pas limités aux exemples décrits. Par exemple, il peut être décidé de ne pas utiliser de générateur aléatoire pour réaliser les étapes d'authentification mutuelle. Une table contenant des nombres aléatoires peut par exemple être mémorisée dans le dispositif sécurisé et un nombre aléatoire peut être choisi dans la table en évitant que le même nombre aléatoire soit utilisé au cours de sessions trop rapprochées. De même, des générateurs pseudo-aléatoires voire de simples compteurs peuvent être utilisés, selon le degré de sécurité souhaité, pour générer des nombres considérés conceptuellement comme "aléatoires".

Le procédé selon l'invention est également susceptible de diverses variantes de réalisation connues en ce qui concerne les étapes en soi classiques qu'il comprend. Par exemple, les étapes d'authentification mutuelle peuvent être remplacées par une étape d'authentification unilatérale d'un dispositif par un autre. L'étape d'authentification unilatérale pourrait même être supprimée sans pour autant réduire les avantages qu'offre le procédé de l'invention en ce qui concerne la réduction du nombre d'étapes de calcul cryptographique.

## Revendications

1. Procédé d'émission de données, comprenant des étapes consistant à :

   - produire, à partir de données à émettre (MESS, ID, DT), un code d'authentification (CA) comprenant des bits d'authentification,
   - émettre les données et une signature (S1) comprenant des bits d'authentification du code d'authentification (CA),
   - recevoir un accusé de réception (ACK), et
   - vérifier l'authenticité de l'accusé de réception, procédé **caractérisé en ce que** :
   - la longueur du code d'authentification (CA) est supérieure à la longueur de la signature (S1), le code d'authentification comprenant des bits cachés qui ne sont pas insérés dans la signature, et
   - l'authenticité de l'accusé de réception (ACK) est déterminée en vérifiant que des bits d'authentification cachés se trouvent dans l'accusé de réception.

2. Procédé selon la revendication 1, dans lequel l'authenticité de l'accusé de réception (ACK) est déterminée en vérifiant que tous les bits cachés se trouvent dans l'accusé de réception.

3. Procédé selon la revendication 1, dans lequel l'authenticité de l'accusé de réception (ACK) est déterminée en vérifiant que des bits cachés se trouvent dans l'accusé de réception dans un ordre correspondant à leur ordre initial dans le code d'authentification (CA) ou dans un ordre inversé par rapport à leur ordre initial.

4. Procédé selon la revendication 1, dans lequel l'authenticité de l'accusé de réception (ACK) est déterminée en vérifiant que tout ou partie des bits cachés se trouve dans l'accusé de réception dans un ordre entrelacé déterminé par une fonction d'entrelacement, par rapport à leur ordre initial dans le code d'authentification (CA).

5. Procédé selon l'une des revendications 1 à 4, dans lequel l'authenticité de l'accusé de réception (ACK) est déterminée en vérifiant également que des bits d'authentification présents dans la signature (S1) se trouvent dans l'accusé de réception.

6. Procédé selon l'une des revendications 1 à 5,

dans lequel le code d'authentification (CA) est produit à partir des données à émettre (MESS, ID, DT) et d'au moins une clé de session (SK) secrète.

7. Procédé selon l'une des revendications 1 à 6, comprenant les étapes consistant à :

   - produire un accusé de réception interne (ACK') en utilisant les bits d'authentification cachés du code d'authentification (CA), et
   - déterminer l'authenticité de l'accusé de réception reçu (ACK) en le comparant à l'accusé de réception interne (ACK').

8. Procédé de réception de données, comprenant des étapes consistant à :

   - recevoir des données et une signature (S1) comprenant des bits d'authentification,
   - produire, à partir des données reçues., un code d'authentification (CA') comprenant des bits d'authentification, et
   - produire et émettre un accusé de réception (ACK),

   **caractérisé en ce que** :

   - la longueur du code d'authentification (CA') est supérieure à la longueur de la signature (S1), le code d'authentification comprenant des bits d'authentification cachés qui ne sont pas présents dans la signature, et
   - l'accusé de réception (ACK) est produit sans produire un nouveau code d'authentification, en utilisant les bits d'authentification cachés du code d'authentification (CA').

9. Procédé selon la revendication 8, dans lequel tous les bits cachés du code d'authentification (CA') sont insérés dans l'accusé de réception (ACK).

10. Procédé selon la revendication 8, dans lequel tout ou partie des bits cachés du code d'authentification (CA') est inséré dans l'accusé de réception (ACK), dans un ordre correspondant à leur ordre initial dans le code d'authentification ou dans un ordre inversé par rapport à leur ordre initial.

11. Procédé selon la revendication 8, dans lequel tout ou partie des bits cachés est inséré dans l'accusé de réception (ACK) dans un ordre entrelacé déterminé par une fonction d'entrelacement, par rapport à leur ordre initial dans le code d'authentification (CA').

12. Procédé selon l'une des revendications 8 à 11, dans lequel une partie des bits d'authentification présents dans la signature (S1) est également insérée dans l'accusé de réception (ACK).

13. Procédé selon l'une des revendications 8 à 12, dans lequel le code d'authentification (CA') est produit à partir des données reçues et d'au moins une clé de session (SK) secrète.

14. Procédé selon l'une des revendications 8 à 13, comprenant une étape de vérification de l'authenticité de la signature (S1) reçue en utilisant le code d'authentification (CA').

15. Procédé de transmission de données entre un point A (D2) et un point B (M2), comprenant les étapes consistant à :

   - produire au point A, à partir de données (MESS, ID, DT) à transmettre, un premier code d'authentification (CA) comprenant des bits d'authentification,
   - transmettre, du point A au point B, les données et une signature (S1) comprenant des bits d'authentification du code d'authentification (CA),
   - produire au point B, à partir des données reçues, un second code d'authentification (CA') présumé identique au premier,
   - produire au point B un accusé de réception (ACK),
   - transmettre du point B au point A l'accusé de réception (ACK), et
   - vérifier au point A l'authenticité de l'accusé de réception (ACK) reçu,

   **caractérisé en ce que** :

   - la longueur du premier code d'authentification (CA) est supérieure à la longueur de la signature (S1), le premier code d'authentification comprenant des bits d'authentification cachés qui ne sont pas insérés dans la signature,
   - le second code d'authentification (CA') comprend également des bits cachés supposés identiques aux bits cachés du premier code d'authentification (CA),
   - l'accusé de réception (ACK) est produit en utilisant des bits d'authentification cachés du second code d'authentification (CA'), et
   - l'authenticité de l'accusé de réception (ACK) est déterminée au point A en vérifiant que des bits d'authentification cachés du premier code d'authentification (CA) se trouvent dans l'accusé de réception.

16. Procédé selon la revendication 15, dans lequel :

   - tous les bits cachés du second code d'authentification (CA') sont insérés dans l'accusé de réception (ACK), et
   - l'authenticité de l'accusé de réception (ACK) est déterminée au point A en vérifiant que tous les bits cachés du premier code d'authentification (CA) se trouvent dans l'accusé de réception.

17. Procédé selon la revendication 15, dans lequel :

   - tout ou partie des bits cachés du second code d'authentification (CA') est inséré dans l'accusé de réception (ACK), dans un ordre correspondant à leur ordre initial dans le second code d'authentification ou dans un ordre inversé par rapport à leur ordre initial, et
   - l'authenticité de l'accusé de réception (ACK) est déterminée au point A en vérifiant que des bits cachés du premier code d'authentification (CA) se trouvent dans l'accusé de réception (ACK) dans un ordre correspondant à leur ordre initial dans le premier code d'authentification (CA) ou dans un ordre inversé par rapport à leur ordre initial.

18. Procédé selon la revendication 15, dans lequel :

   - tout ou partie des bits cachés du second code d'authentification (CA') est inséré dans l'accusé de réception (ACK) dans un ordre entrelacé déterminé par une fonction d'entrelacement, par rapport à leur ordre initial dans le second code d'authentification (CA'), et
   - l'authenticité de l'accusé de réception (ACK) est déterminée au point A en vérifiant que tout ou partie des bits cachés du premier code d'authentification (CA) se trouve dans l'accusé de réception (ACK) dans un ordre entrelacé déterminé par ladite fonction d'entrelacement, par rapport à leur ordre initial dans le premier code d'authentification (CA).

19. Procédé selon l'une des revendications 15 à 18, dans lequel :

   - une partie des bits d'authentification présents dans la signature (S1) est également insérée dans l'accusé de réception (ACK), et
   - l'authenticité de l'accusé de réception (ACK) est déterminée en vérifiant également que les bits d'authentification de la signature (S1) se trouvent dans l'accusé de réception.

20. Procédé selon l'une des revendications 15 à 19, dans lequel le premier code d'authentification (CA) est produit à partir des données à transmettre (MESS, ID, DT) et d'au moins une clé de session (SK) secrète connue au point A et connue au point B.

21. Procédé selon l'une des revendications 15 à 20, comprenant une étape de vérification de l'authenticité de la signature (S1) reçue au point B en utilisant le second code d'authentification (CA').

22. Procédé selon l'une des revendications 15 à 21, comprenant les étapes consistant à :

- produire au point A un accusé de réception interne (ACK') en utilisant les bits d'authentification cachés du premier code d'authentification (CA), et
- déterminer au point A l'authenticité de l'accusé de réception reçu (ACK) en le comparant à l'accusé de réception interne (ACK').

23. Dispositif (D2) d'émission de données comprenant des moyens (REG1-REG3, LCMP, CRCT1, UC1, MP1, ICT1) de traitement de données et de communication pour :

- produire, à partir de données à émettre (MESS, ID, DT), un code d'authentification (CA) comprenant des bits d'authentification,
- émettre les données et une signature (S1) comprenant des bits d'authentification du code d'authentification (CA),
- recevoir un accusé de réception (ACK) de données, et
- vérifier l'authenticité de l'accusé de réception (ACK),

**caractérisé en ce que** les moyens de traitement de données sont agencés pour :

- produire le code d'authentification (CA) de manière que la longueur du code d'authentification soit supérieure à la longueur de la signature (S1), et n'insérer dans la signature (S1) qu'une partie des bits d'authentification, les autres bits du code d'authentification formant des bits cachés, et
- déterminer l'authenticité de l'accusé de réception (ACK) en vérifiant que des bits d'authentification cachés se trouvent dans l'accusé de réception.

24. Dispositif selon la revendication 23, dans lequel les moyens de traitement de données sont agencés pour vérifier que tous les bits cachés se trouvent dans l'accusé de réception (ACK).

25. Dispositif selon la revendication 23, dans lequel les moyens de traitement de données sont agencés pour vérifier que des bits cachés se trouvent dans l'accusé de réception (ACK) dans un ordre correspondant à leur ordre initial dans le code d'authentification (CA) ou dans un ordre inversé par rapport à leur ordre initial.

26. Dispositif selon la revendication 23, dans lequel les moyens de traitement de données sont agencés pour vérifier que tout ou partie des bits cachés se trouve dans l'accusé de réception (ACK) dans un ordre entrelacé déterminé par une fonction d'entrelacement, par rapport à leur ordre initial dans le code d'authentification (CA).

27. Dispositif selon l'une des revendications 23 à 26, dans lequel les moyens de traitement de données sont agencés pour vérifier également que des bits d'authentification présents dans la signature (S1) se trouvent dans l'accusé de réception (ACK).

28. Dispositif selon l'une des revendications 23 à 27, dans lequel les moyens de traitement de données sont agencés pour produire le code d'authentification (CA) à partir des données à émettre (MESS, ID, DT) et d'au moins une clé de session (SK) secrète.

29. Dispositif selon l'une des revendications 23 à 28, dans lequel les moyens de traitement de données sont agencés pour :

- produire un accusé de réception interne (ACK') en utilisant les bits d'authentification cachés du premier code d'authentification (CA), et
- déterminer l'authenticité de l'accusé de réception reçu (ACK) en le comparant à l'accusé de réception interne (ACK').

30. Dispositif (M2) de réception de données comprenant des moyens (CRCT2, UC2, MP2, ICT2) de traitement de données et de communication pour :

- recevoir des données et une signature (S1) comprenant des bits d'authentification,
- produire, à partir des données reçues, un code d'authentification (CA') comprenant des bits d'authentification, et
- produire et émettre un accusé de réception (ACK),

**caractérisé en ce que** les moyens de traitement de données sont agencés pour :

- produire le code d'authentification (CA') de manière que le code d'authentification soit d'une longueur supérieure à la longueur de la signature (S1) et comprenne des bits d'authentification cachés qui ne sont pas présents dans la signature (S1), et
- produire l'accusé de réception (ACK) sans produire un nouveau code d'authentification, en utilisant les bits d'authentification cachés du code d'authentification (CA').

31. Dispositif selon la revendication 30, dans lequel les moyens de traitement de données sont agencés pour insérer dans l'accusé de réception (ACK) tous les bits cachés du code d'authentification (CA').

**32.** Dispositif selon la revendication 30, dans lequel les moyens de traitement de données sont agencés pour insérer tout ou partie des bits cachés du code d'authentification (CA') dans l'accusé de réception (ACK), dans un ordre correspondant à leur ordre initial dans le code d'authentification ou dans un ordre inversé par rapport à leur ordre initial.

**33.** Dispositif selon la revendication 30, dans lequel les moyens de traitement de données sont agencés pour insérer tout ou partie des bits cachés dans l'accusé de réception (ACK), dans un ordre entrelacé déterminé par une fonction d'entrelacement par rapport à leur ordre initial dans le code d'authentification (CA').

**34.** Dispositif selon l'une des revendications 30 à 33, dans lequel les moyens de traitement de données sont agencés pour insérer également dans l'accusé de réception (ACK) une partie des bits d'authentification présents dans la signature (S1).

**35.** Dispositif selon l'une des revendications 30 à 34, dans lequel les moyens de traitement de données sont agencés pour produire le code d'authentification (CA') à partir des données reçues et d'au moins une clé de session (SK) secrète.

**36.** Dispositif selon l'une des revendications 30 à 35, lequel les moyens de traitement de données sont agencés pour vérifier l'authenticité de la signature (S1) reçue en utilisant le code d'authentification (CA').

**37.** Système de transmission de données entre un point A (D2) et un point B (M2), comprenant des moyens (REG1-REG3, LCMP, CRCT1, UC1, MP1, ICT1, CRCT2, UC2, MP2, ICT2) de traitement de données et de communication pour :

- produire au point A, à partir de données (MESS, ID, DT) à transmettre, un premier code d'authentification (CA) comprenant des bits d'authentification,
- transmettre, du point A au point B, les données et une signature (S1) comprenant des bits d'authentification du code d'authentification (CA),
- produire au point B, à partir des données reçues, un second code d'authentification (CA') présumé identique au premier,
- produire au point B un accusé de réception (ACK),
- transmettre du point B au point A l'accusé de réception (ACK), et
- vérifier au point A l'authenticité de l'accusé de réception (ACK) reçu,

**caractérisé en ce que** les moyens de traitement de données sont agencés pour :

- produire le premier code d'authentification (CA) au point A de manière que la longueur du premier code d'authentification (CA) soit supérieure à la longueur de la signature (S1), le premier code d'authentification comprenant des bits d'authentification cachés qui ne sont pas insérés dans la signature (S1),
- produire le second code d'authentification (CA') de manière que le second code d'authentification comprenne également des bits cachés supposés identiques aux bits cachés du premier code d'authentification (CA),
- produire l'accusé de réception (ACK) en utilisant des bits d'authentification cachés du second code d'authentification (CA'), et
- déterminer l'authenticité de l'accusé de réception (ACK) au point A en vérifiant que des bits d'authentification cachés du premier code d'authentification (CA) se trouvent dans l'accusé de réception.

**38.** Système selon la revendication 37, dans lequel les moyens de traitement de données sont agencés pour :

- insérer dans l'accusé de réception (ACK) tous les bits cachés du second code d'authentification (CA'), et
- déterminer l'authenticité de l'accusé de réception (ACK) au point A en vérifiant que tous les bits cachés du premier code d'authentification (CA) se trouvent dans l'accusé de réception.

**39.** Système selon la revendication 37, dans lequel les moyens de traitement de données sont agencés pour :

- insérer tout ou partie des bits cachés du second code d'authentification (CA') dans l'accusé de réception (ACK), dans un ordre correspondant à leur ordre initial dans le second code d'authentification ou dans un ordre inversé par rapport à leur ordre initial, et
- déterminer l'authenticité de l'accusé de réception (ACK) au point A en vérifiant que des bits cachés du premier code d'authentification (CA) se trouvent dans l'accusé de réception (ACK) dans un ordre correspondant à leur ordre initial dans le premier code d'authentification ou dans un ordre inversé par rapport à leur ordre initial.

**40.** Système selon la revendication 37, dans lequel les moyens de traitement de données sont agencés pour :

   - insérer tout ou partie des bits cachés du second code d'authentification (CA') dans l'accusé de réception (ACK) dans un ordre entrelacé déterminé par une fonction d'entrelacement, par rapport à leur ordre initial dans le second code d'authentification, et
   - déterminer l'authenticité de l'accusé de réception (ACK) au point A en vérifiant que tout ou partie des bits cachés du premier code d'authentification (CA) se trouve dans l'accusé de réception (ACK) dans un ordre entrelacé déterminé par ladite fonction d'entrelacement, par rapport à leur ordre initial dans le premier code d'authentification.

**41.** Système selon l'une des revendications 37 à 40, dans lequel les moyens de traitement de données sont agencés pour :

   - insérer également dans l'accusé de réception (ACK) une partie des bits d'authentification présents dans la signature (S1), et
   - déterminer l'authenticité de l'accusé de réception (ACK) en vérifiant également que les bits d'authentification de la signature (S1) se trouvent dans l'accusé de réception.

**42.** Système selon l'une des revendications 37 à 41, dans lequel les moyens de traitement de données sont agencés pour produire la signature (S1) à partir des données à transmettre (MESS, ID, DT) et d'au moins une clé de session (SK) secrète connue au point A et connue au point B.

**43.** Système selon l'une des revendications 37 à 42, dans lequel les moyens de traitement de données sont agencés pour vérifier l'authenticité de la signature (S1) reçue au point B en utilisant le second code d'authentification (CA').

**44.** Système selon l'une des revendications 37 à 43, dans lequel les moyens de traitement de données sont agencés pour:

   - produire au point A un accusé de réception interne (ACK') en utilisant les bits d'authentification cachés du premier code d'authentification (CA), et
   - déterminer au point A l'authenticité de l'accusé de réception reçu (ACK) en le comparant à l'accusé de réception interne (ACK').

**Claims**

**1.** A method for sending data, comprising steps of:

   - producing, from data to be sent (MESS, ID, DT), an authentication code (CA) comprising authentication bits,
   - sending the data and a signature (S1) comprising authentication bits of the authentication code (CA),
   - receiving an acknowledgement (ACK), and
   - checking the authenticity of the acknowledgement, method **characterized in that:**
   - the length of the authentication code (CA) is greater than the length of the signature (S1), the authentication code comprising hidden bits which are not inserted into the signature, and
   - the authenticity of the acknowledgement (ACK) is determined by checking that hidden authentication bits are in the acknowledgement.

**2.** Method according to claim 1, wherein the authenticity of the acknowledgement (ACK) is determined by checking that all the hidden bits are in the acknowledgement.

**3.** Method according to claim 1, wherein the authenticity of the acknowledgement (ACK) is determined by checking that hidden bits are in the acknowledgement in an order corresponding to their initial order in the authentication code (CA) or in a reverse order compared to their initial order.

**4.** Method according to claim 1, wherein the authenticity of the acknowledgement (ACK) is determined by checking that all or part of the hidden bits are in the acknowledgement in an interlaced order determined by an interlacing function, compared to their initial order in the authentication code (CA).

**5.** Method according to one of claims 1 to 4, wherein the authenticity of the acknowledgement (ACK) is determined by also checking that authentication bits present in the signature (S1) are in the acknowledgement.

**6.** Method according to one of claims 1 to 5, wherein the authentication code (CA) is produced from the data to be sent (MESS, ID, DT) and at least one secret session key (SK).

**7.** Method according to one of claims 1 to 6, comprising the steps of:

   - producing an internal acknowledgement (ACK') by using the hidden authentication bits of the authentication code (CA), and
   - determining the authenticity of the acknowledgement received (ACK) by comparing it with the internal acknowledgement (ACK').

8. Method for receiving data, comprising steps of:

- receiving data and a signature (S1) comprising authentication bits,
- producing, from the data received, an authentication code (CA') comprising authentication bits, and
- producing and sending an acknowledgement (ACK),

**characterized in that:**

- the length of the authentication code (CA') is greater than the length of the signature (S1), the authentication code comprising hidden authentication bits which are not present in the signature, and
- the acknowledgement (ACK) is produced without producing any new authentication code, by using the hidden authentication bits of the authentication code (CA').

9. Method according to claim 8, wherein all the hidden bits of the authentication code (CA') are inserted into the acknowledgement (ACK).

10. Method according to claim 8, wherein all or part of the hidden bits of the authentication code (CA') are inserted into the acknowledgement (ACK), in an order corresponding to their initial order in the authentication code or in a reverse order compared to their initial order.

11. Method according to claim 8, wherein all or part of the hidden bits are inserted into the acknowledgement (ACK) in an interlaced order determined by an interlacing function, compared to their initial order in the authentication code (CA').

12. Method according to one of claims 8 to 11, wherein a portion of the authentication bits present in the signature (S1) is also inserted into the acknowledgement (ACK).

13. Method according to one of claims 8 to 12, wherein the authentication code (CA') is produced from the data received and at least one secret session key (SK).

14. Method according to one of claims 8 to 13, comprising a step of checking the authenticity of the signature (S1) received by using the authentication code (CA').

15. A method for transmitting data between a point A (D2) and a point B (M2), comprising the steps of:

- producing at point A, from data (MESS, ID, DT) to be transmitted, a first authentication code (CA) comprising authentication bits,
- transmitting, from point A to point B, the data and a signature (S1) comprising authentication bits of the authentication code (CA),
- producing at point B, from the data received, a second authentication code (CA') presumed to be identical to the first one,
- producing at point B an acknowledgement (ACK),
- transmitting the acknowledgement (ACK) from point B to point A, and
- checking at point A the authenticity of the acknowledgement (ACK) received,

**characterized in that:**

- the length of the first authentication code (CA) is greater than the length of the signature (S1), the first authentication code comprising hidden authentication bits which are not inserted into the signature,
- the second authentication code (CA') also comprises hidden bits assumed to be identical to the hidden bits of the first authentication code (CA),
- the acknowledgement (ACK) is produced by using hidden authentication bits of the second authentication code (CA'), and
- the authenticity of the acknowledgement (ACK) is determined at point A by checking that hidden authentication bits of the first authentication code (CA) are in the acknowledgement.

16. Method according to claim 15, wherein:

- all the hidden bits of the second authentication code (CA') are inserted into the acknowledgement (ACK), and
- the authenticity of the acknowledgement (ACK) is determined at point A by checking that all the hidden bits of the first authentication code (CA) are in the acknowledgement.

17. Method according to claim 15, wherein:

- all or part of the hidden bits of the second authentication code (CA') are inserted into the acknowledgement (ACK), in an order corresponding to their initial order in the second authentication code or in a reverse order compared to their initial order, and
- the authenticity of the acknowledgement (ACK) is determined at point A by checking that hidden bits of the first authentication code (CA) are in the acknowledgement (ACK) in an order corresponding to their initial order in the first authentication code (CA) or in a reverse order compared to their initial order.

18. Method according to claim 15, wherein:

- all or part of the hidden bits of the second authentication code (CA') are inserted into the acknowledgement (ACK) in an interlaced order determined by an interlacing function, compared to their initial order in the second authentication code (CA'), and
- the authenticity of the acknowledgement (ACK) is determined at point A by checking that all or part of the hidden bits of the first authentication code (CA) are in the acknowledgement (ACK) in an interlaced order determined by said interlacing function, compared to their initial order in the first authentication code (CA).

19. Method according to one of claims 15 to 18, wherein:

- a portion of the authentication bits present in the signature (S1) is also inserted into the acknowledgement (ACK), and
- the authenticity of the acknowledgement (ACK) is determined by also checking that the authentication bits of the signature (S1) are in the acknowledgement.

20. Method according to one of claims 15 to 19, wherein the first authentication code (CA) is produced from the data to be transmitted (MESS, ID, DT) and at least one secret session key (SK) known at point A and known at point B.

21. Method according to one of claims 15 to 20, comprising a step of checking the authenticity of the signature (S1) received at point B by using the second authentication code (CA').

22. Method according to one of claims 15 to 21, comprising the steps of:

- producing at point A an internal acknowledgement (ACK') by using the hidden authentication bits of the first authentication code (CA), and
- determining at point A the authenticity of the acknowledgement received (ACK) by comparing it with the internal acknowledgement (ACK').

23. A device (D2) for sending data comprising data processing and communication means (REG1-REG3, LCMP, CRCT1, UC1, MP1, ICT1) for:

- producing, from data to be sent (MESS, ID, DT), an authentication code (CA) comprising authentication bits,

- sending the data and a signature (S1) comprising authentication bits of the authentication code (CA),
- receiving an acknowledgement (ACK) of data receipt, and
- checking the authenticity of the acknowledgement (ACK),

**characterized in that** the data processing means are arranged for:

- producing the authentication code (CA) so that the length of the authentication code is greater than the length of the signature (S1), and only inserting a portion of the authentication bits into the signature (S1), the other bits of the authentication code forming hidden bits, and
- determining the authenticity of the acknowledgement (ACK) by checking that hidden authentication bits are in the acknowledgement.

24. Device according to claim 23, wherein the data processing means are arranged for checking that all the hidden bits are in the acknowledgement (ACK).

25. Device according to claim 23, wherein the data processing means are arranged for checking that hidden bits are in the acknowledgement (ACK) in an order corresponding to their initial order in the authentication code (CA) or in a reverse order compared to their initial order.

26. Device according to claim 23, wherein the data processing means are arranged for checking that all or part of the hidden bits are in the acknowledgement (ACK) in an interlaced order determined by an interlacing function, compared to their initial order in the authentication code (CA).

27. Device according to one of claims 23 to 26, wherein the data processing means are arranged for also checking that authentication bits present in the signature (S1) are in the acknowledgement (ACK).

28. Device according to one of claims 23 to 27, wherein the data processing means are arranged for producing the authentication code (CA) from the data to be sent (MESS, ID, DT) and at least one secret session key (SK).

29. Device according to one of claims 23 to 28, wherein the data processing means are arranged for:

- producing an internal acknowledgement (ACK') by using the hidden authentication bits of the first authentication code (CA), and
- determining the authenticity of the acknowledgement received (ACK) by comparing it with the internal acknowledgement (ACK').

30. Device (M2) for receiving data comprising data processing and communication means (CRCT2, UC2, MP2, ICT2) for:

- receiving data and a signature (S1) comprising authentication bits,
- producing, from the data received, an authentication code (CA') comprising authentication bits, and
- producing and sending an acknowledgement (ACK),

**characterized in that** the data processing means are arranged for:

- producing the authentication code (CA') so that the authentication code is of a length greater than the length of the signature (S1) and includes hidden authentication bits which are not present in the signature (S1), and
- producing the acknowledgement (ACK) without producing any new authentication code, by using the hidden authentication bits of the authentication code (CA').

31. Device according to claim 30, wherein the data processing means are arranged for inserting into the acknowledgement (ACK) all the hidden bits of the authentication code (CA').

32. Device according to claim 30, wherein the data processing means are arranged for inserting all or part of the hidden bits of the authentication code (CA') into the acknowledgement (ACK), in an order corresponding to their initial order in the authentication code or in a reverse order compared to their initial order.

33. Device according to claim 30, wherein the data processing means are arranged for inserting all or part of the hidden bits into the acknowledgement (ACK), in an interlaced order determined by an interlacing function compared to their initial order in the authentication code (CA').

34. Device according to one of claims 30 to 33, wherein the data processing means are arranged for also inserting into the acknowledgement (ACK) a portion of the authentication bits present in the signature (S1).

35. Device according to one of claims 30 to 34, wherein the data processing means are arranged for producing the authentication code (CA') from the data received and at least one secret session key (SK).

36. Device according to one of claims 30 to 35, wherein the data processing means are arranged for checking the authenticity of the signature (S1) received by using the authentication code (CA').

37. A data transmission system for transmitting data between a point A (D2) and a point B (M2), comprising data processing and communication means (REG1-REG3, LCMP, CRCT1, UC1, MP1, ICT1, CRCT2, UC2, MP2, ICT2) for:

- producing at point A, from data (MESS, ID, DT) to be transmitted, a first authentication code (CA) comprising authentication bits,
- transmitting, from point A to point B, the data and a signature (S1) comprising authentication bits of the authentication code (CA),
- producing at point B, from the data received, a second authentication code (CA') presumed to be identical to the first one,
- producing an acknowledgement (ACK) at point B,
- transmitting the acknowledgement (ACK) from point B to point A, and
- checking at point A the authenticity of the acknowledgement (ACK) received,

**characterized in that** the data processing means are arranged for:

- producing the first authentication code (CA) at point A so that the length of the first authentication code (CA) is greater than the length of the signature (S1), the first authentication code comprising hidden authentication bits which are not inserted into the signature (S1),
- producing the second authentication code (CA') so that the second authentication code also comprises hidden bits assumed to be identical to the hidden bits of the first authentication code (CA),
- producing the acknowledgement (ACK) by using hidden authentication bits of the second authentication code (CA'), and
- determining the authenticity of the acknowledgement (ACK) at point A by checking that hidden authentication bits of the first authentication code (CA) are in the acknowledgement.

38. System according to claim 37, wherein the data processing means are arranged for:

- inserting into the acknowledgement (ACK) all the hidden bits of the second authentication code (CA'), and
- determining the authenticity of the acknowledgement (ACK) at point A by checking that all the hidden bits of the first authentication code (CA) are in the acknowledgement.

39. System according to claim 37, wherein the data processing means are arranged for:

- inserting all or part of the hidden bits of the second authentication code (CA') into the acknowledgement (ACK), in an order corresponding to their initial order in the second authentication code or in a reverse order compared to their initial order, and
- determining the authenticity of the acknowledgement (ACK) at point A by checking that hidden bits of the first authentication code (CA) are in the acknowledgement (ACK) in an order corresponding to their initial order in the first authentication code or in a reverse order compared to their initial order.

40. System according to claim 37, wherein the data processing means are arranged for:

- inserting all or part of the hidden bits of the second authentication code (CA') into the acknowledgement (ACK) in an interlaced order determined by an interlacing function, compared to their initial order in the second authentication code, and
- determining the authenticity of the acknowledgement (ACK) at point A by checking that all or part of the hidden bits of the first authentication code (CA) are in the acknowledgement (ACK) in an interlaced order determined by said interlacing function, compared to their initial order in the first authentication code.

41. System according to one of claims 37 to 40, wherein the data processing means are arranged for:

- also inserting into the acknowledgement (ACK) a portion of the authentication bits present in the signature (S1), and
- determining the authenticity of the acknowledgement (ACK) by also checking that the authentication bits of the signature (S1) are in the acknowledgement.

42. System according to one of claims 37 to 41, wherein the data processing means are arranged for producing the signature (S1) from the data to be transmitted (MESS, ID, DT) and at least one secret session key (SK) known at point A and known at point B.

43. System according to one of claims 37 to 42, wherein the data processing means are arranged for checking the authenticity of the signature (S1) received at point B by using the second authentication code (CA').

44. System according to one of claims 37 to 43, wherein the data processing means are arranged for:

- producing at point A an internal acknowledgement (ACK') by using the hidden authentication bits of the first authentication code (CA), and
- determining at point A the authenticity of the acknowledgement received (ACK) by comparing it with the internal acknowledgement (ACK').

**Patentansprüche**

1. Ein Verfahren zum Senden von Daten, umfassend Schritte, die darin bestehen,:

- aus zu sendenden Daten (MESS, ID, DT), einen Authentifizierungskode (CA) zu generieren, der Authentifizierungsbits umfasst,
- die Daten und eine Authentifizierungsbits des Authentifizierungskodes (CA) umfassende Unterschrift (S1) zu senden,
- eine Rückmeldung (ACK) zu empfangen, und
- die Authentizität der Rückmeldung zu prüfen, Verfahren **dadurch gekennzeichnet, dass:**
- die Länge des Authentifizierungskodes (CA) größer ist, als die Länge der Unterschrift (S1), wobei der Authentifizierungskode versteckte Bits aufweist, die nicht in die Unterschrift eingefügt sind, und dass
- die Authentizität der Rückmeldung (ACK) bestimmt wird, indem geprüft wird, dass sich versteckte Authentifizierungsbits in der Rückmeldung befinden.

2. Verfahren nach Anspruch 1, bei dem die Authentizität der Rückmeldung (ACK) bestimmt wird, indem geprüft wird, dass sich alle versteckten Bits in der Rückmeldung befinden.

3. Verfahren nach Anspruch 1, bei dem die Authentizität der Rückmeldung (ACK) bestimmt wird, indem geprüft wird, dass sich versteckte Bits in der Rückmeldung befinden, und zwar in einer Reihenfolge, die ihrer anfänglichen Reihenfolge im Authentifizierungskode (CA) entspricht, oder in einer Reihenfolge, die in Bezug auf ihre anfängliche Reihenfolge umgekehrt ist.

4. Verfahren nach Anspruch 1, bei dem die Authentizität der Rückmeldung (ACK) bestimmt wird, indem geprüft wird, dass sich alle oder ein Teil der versteckten Bits in der Rückmeldung befinden, und zwar in einer in Bezug auf ihre anfängliche Reihenfolge im Authentifizierungskode (CA) verschachtelten, durch eine Verschachtelungsfunktion bestimmten Reihenfolge.

**5.** Verfahren nach einem der Ansprüche 1 bis 4, bei dem die Authentizität der Rückmeldung (ACK) bestimmt wird, indem auch geprüft wird, dass sich in der Unterschrift (S1) vorhandene Authentifizierungsbits in der Rückmeldung befinden.

**6.** Verfahren nach einem der Ansprüche 1 bis 5, bei dem der Authentifizierungskode (CA) aus den zu sendenden Daten (MESS, ID, DT) und wenigstens einem geheimen Sitzungsschlüssel (SK) generiert wird.

**7.** Verfahren nach einem der Ansprüche 1 bis 6, umfassend Schritte, die darin bestehen:

- anhand von den versteckten Authentifizierungsbits des Authentifizierungskodes (CA) eine interne Rückmeldung (ACK') zu generieren, und
- die Authentizität der empfangenen Rückmeldung (ACK) durch einen Vergleich derselben mit der internen Rückmeldung (ACK') zu bestimmen.

**8.** Verfahren zum Empfang von Daten, umfassend Schritte, die darin bestehen:

- Daten und eine Unterschrift (S1) zu empfangen, die Authentifizierungsbits umfasst,
- aus den empfangenen Daten, einen Authentifizierungskode (CA') zu generieren, der Authentifizierungsbits umfasst, und
- eine Rückmeldung (ACK) zu generieren und zu senden,

**dadurch gekennzeichnet, dass:**

- die Länge des Authentifizierungskodes (CA') größer ist, als die Länge der Unterschrift (S1), wobei der Authentifizierungskode versteckte Authentifizierungsbits umfasst, die in der Unterschrift nicht vorhanden sind, und dass
- anhand der versteckten Authentifizierungsbits des Authentifizierungskodes (CA') die Rückmeldung (ACK) generiert wird, ohne einen neuen Authentifizierungskode zu generieren.

**9.** Verfahren nach Anspruch 8, bei dem alle versteckten Bits des Authentifizierungskodes (CA') in die Rückmeldung (ACK) eingefügt sind.

**10.** Verfahren nach Anspruch 8, bei dem alle oder ein Teil der versteckten Bits des Authentifizierungskodes (CA') in die Rückmeldung (ACK) eingefügt sind, und zwar in einer Reihenfolge, die ihrer anfänglichen Reihenfolge im Authentifizierungskode entspricht, oder in einer Reihenfolge, die in Bezug auf ihre anfängliche Reihenfolge umgekehrt ist.

**11.** Verfahren nach Anspruch 8, bei dem alle oder ein Teil der versteckten Bits in die Rückmeldung (ACK) eingefügt sind, und zwar in einer in Bezug auf ihre anfängliche Reihenfolge im Authentifizierungskode (CA') verschachtelten, durch eine Verschachtelungsfunktion bestimmten Reihenfolge.

**12.** Verfahren nach einem der Ansprüche 8 bis 11, bei dem ein Teil der in der Unterschrift (S1) vorhandenen Authentifizierungsbits auch in die Rückmeldung (ACK) eingefügt ist.

**13.** Verfahren nach einem der Ansprüche 8 bis 12, bei dem der Authentifizierungskode (CA') aus den empfangenen Daten und wenigstens einem geheimen Sitzungsschlüssel (SK) generiert wird.

**14.** Verfahren nach einem der Ansprüche 8 bis 13, das einen Schritt der Authentizitätsprüfung der empfangenen Unterschrift (S1) anhand des Authentifizierungskodes (CA') umfasst.

**15.** Verfahren zum Übertragen von Daten zwischen einem Punkt A (D2) und einem Punkt B (M2), umfassend Schritte, die darin bestehen:

- aus zu übertragenden Daten (MESS, ID, DT), einen ersten, Authentifizierungsbits umfassenden Authentifizierungskode (CA) am Punkt A zu generieren,
- die Daten und eine Authentifizierungsbits des Authentifizierungskodes (CA) umfassende Unterschrift (S1) von Punkt A nach Punkt B zu übertragen,
- aus den empfangenen Daten, einen zweiten Authentifizierungskode (CA') am Punkt B zu generieren, der vermutlich mit der ersten identisch ist,
- eine Rückmeldung (ACK) am Punkt B zu generieren,
- die Rückmeldung (ACK) von Punkt B nach Punkt A zu übertragen, und
- die Authentizität der empfangenen Rückmeldung (ACK) am Punkt A zu prüfen,

**dadurch gekennzeichnet, dass:**

- die Länge des ersten Authentifizierungskodes (CA) größer ist, als die Länge der Unterschrift (S1), wobei der erste Authentifizierungskode versteckte Authentifizierungsbits umfasst, die nicht in die Unterschrift eingefügt sind,
- der zweite Authentifizierungskode (CA') auch versteckte Bits umfasst, die vermutlich mit den versteckten Bits des ersten Authentifizierungskodes (CA) identisch sind,
- die Rückmeldung (ACK) anhand von versteckten Authentifizierungsbits des zweiten Authentifizierungskodes (CA') generiert wird, und dass
- die Authentizität der Rückmeldung (ACK) am Punkt A bestimmt wird, indem geprüft wird, dass sich versteckte Authentifizierungsbits des ersten Authentifizierungskodes (CA) in der Rückmeldung befinden.

16. Verfahren nach Anspruch 15, bei dem:

- alle versteckten Bits des zweiten Authentifizierungskodes (CA') in die Rückmeldung (ACK) eingefügt sind, und
- die Authentizität der Rückmeldung (ACK) am Punkt A bestimmt wird, indem geprüft wird, dass sich alle versteckten Bits des ersten Authentifizierungskodes (CA) in der Rückmeldung befinden.

17. Verfahren nach Anspruch 15, bei dem:

- alle oder ein Teil der versteckten Bits des zweiten Authentifizierungskodes (CA') in die Rückmeldung (ACK) eingefügt sind, und zwar in einer Reihenfolge, die ihrer anfänglichen Reihenfolge im zweiten Authentifizierungskode entspricht, oder in einer Reihenfolge, die in Bezug auf ihre anfängliche Reihenfolge umgekehrt ist, und
- die Authentizität der Rückmeldung (ACK) am Punkt A bestimmt wird, indem geprüft wird, dass sich versteckte Bits des ersten Authentifizierungskodes (CA) in der Rückmeldung befinden (ACK), und zwar in einer Reihenfolge, die ihrer anfänglichen Reihenfolge im ersten Authentifizierungskodes (CA) entspricht, oder in einer Reihenfolge, die in Bezug auf ihre anfängliche Reihenfolge umgekehrt ist.

18. Verfahren nach Anspruch 15, bei dem:

- alle oder ein Teil der versteckten Bits des zweiten Authentifizierungskodes (CA') in die Rückmeldung (ACK) eingefügt sind, und zwar in einer in Bezug auf ihre anfängliche Reihenfolge im zweiten Authentifizierungskode (CA') verschachtelten, durch eine Verschachtelungsfunktion bestimmten Reihenfolge, und bei dem
- die Authentizität der Rückmeldung (ACK) am Punkt A bestimmt wird, indem geprüft wird, dass sich alle oder ein Teil der versteckten Bits des ersten Authentifizierungskodes (CA) in der Rückmeldung (ACK) befinden, und zwar in einer in Bezug auf ihre anfängliche Reihenfolge im ersten Authentifizierungskode (CA) verschachtelten, durch die genannte Verschachtelungsfunktion bestimmten Reihenfolge.

19. Verfahren nach einem der Ansprüche 15 bis 18, bei dem:

- ein Teil der in der Unterschrift (S1) vorhandenen Authentifizierungsbits auch in die Rückmeldung (ACK) eingefügt ist, und bei dem
- die Authentizität der Rückmeldung (ACK) bestimmt wird, indem auch geprüft wird, dass sich die Authentifizierungsbits der Unterschrift (S1) in der Rückmeldung befinden.

20. Verfahren nach einem der Ansprüche 15 bis 19, bei dem der erste Authentifizierungskode (CA) aus den zu übertragenden Daten (MESS, ID, DT) und wenigstens einem geheimen am Punkt A und am Punkt B bekannten Sitzungsschlüssel (SK) generiert wird.

21. Verfahren nach einem der Ansprüche 15 bis 20, umfassend einen Schritt der Authentizitätsprüfung der am Punkt B empfangenen Unterschrift (S1) anhand des zweiten Authentifizierungskodes (CA').

22. Verfahren nach einem der Ansprüche 15 bis 21, umfassend Schritte, die darin bestehen:

- anhand der versteckten Authentifizierungsbits des ersten Authentifizierungskodes (CA) eine interne Rückmeldung (ACK') am Punkt A zu generieren, und
- die Authentizität der empfangenen Rückmeldung (ACK) am Punkt A durch einen Vergleich derselben mit der internen Rückmeldung (ACK') zu bestimmen.

23. Eine Datensendevorrichtung (D2), die Datenverarbeitungs- und Kommunikationsmittel (REG1-REG3, LCMP, CRCT1, UC1, MP1, ICT1) umfasst, um:

- aus zu sendenden Daten (MESS, ID, DT), einen Authentifizierungskode (CA) zu generieren, der Authentifizierungsbits umfasst,
- die Daten und eine Authentifizierungsbits des Authentifizierungskodes (CA) umfassende Unterschrift (S1) zu senden,
- eine Rückmeldung (ACK) der Daten zu empfangen, und
- die Authentizität der Rückmeldung (ACK) zu prüfen,

**dadurch gekennzeichnet, dass** die Datenverarbeitungsmittel derart angeordnet sind, dass:

- sie den Authentifizierungskode (CA) derart generieren, dass die Länge des Authentifizierungskodes größer ist, als die Länge der Unterschrift (S1), und dass sie nur einen Teil der Authentifizierungsbits in die Unterschrift (S1) einfügen, wobei die anderen Bits des Authentifizierungskodes versteckte Bits bilden, und dass
- sie die Authentizität der Rückmeldung (ACK) bestimmen, indem geprüft wird, dass sich versteckte Authentifizierungsbits in der Rückmeldung befinden.

24. Vorrichtung nach Anspruch 23, bei dem die Datenverarbeitungsmittel derart angeordnet sind, dass sie prüfen, dass sich alle versteckten Bits in der Rückmeldung befinden (ACK).

25. Vorrichtung nach Anspruch 23, bei dem die Datenverarbeitungsmittel derart angeordnet sind, dass sie prüfen, dass sich versteckte Bits in der Rückmeldung befinden (ACK), und zwar in einer Reihenfolge, die ihrer anfänglichen Reihenfolge im Authentifizierungskode (CA) entspricht, oder in einer Reihenfolge, die in Bezug auf ihre anfängliche Reihenfolge umgekehrt ist.

26. Vorrichtung nach Anspruch 23, bei dem die Datenverarbeitungsmittel derart angeordnet sind, dass sie prüfen, dass sich alle oder ein Teil der versteckten Bits in der Rückmeldung befinden (ACK), und zwar in einer in Bezug auf ihre anfängliche Reihenfolge im Authentifizierungskode (CA) verschachtelten, durch eine Verschachtelungsfunktion bestimmten Reihenfolge.

27. Vorrichtung nach einem der Ansprüche 23 bis 26, bei dem die Datenverarbeitungsmittel derart angeordnet sind, dass sie auch prüfen, dass sich in der Unterschrift (S1) vorhandene Authentifizierungsbits in der Rückmeldung befinden (ACK).

28. Vorrichtung nach einem der Ansprüche 23 bis 27, bei dem die Datenverarbeitungsmittel derart angeordnet sind, dass sie den Authentifizierungskode (CA) aus den zu sendenden Daten (MESS, ID, DT) und wenigstens einem geheimen Sitzungsschlüssel (SK) generieren.

29. Vorrichtung nach einem der Ansprüche 23 bis 28, bei dem die Datenverarbeitungsmittel derart angeordnet sind, dass:

　　- sie anhand der versteckten Authentifizierungsbits des ersten Authentifizierungskodes (CA) eine interne Rückmeldung (ACK') generieren, und dass
　　- sie die Authentizität der empfangenen Rückmeldung (ACK) durch einen Vergleich derselben mit der internen Rückmeldung (ACK') bestimmen.

30. Eine Datenempfangsvorrichtung (M2), die Datenverarbeitungs- und Kommunikationsmittel (CRCT2, UC2, MP2, ICT2) umfasst, um:

　　- Daten und eine Authentifizierungsbits umfassende Unterschrift (S1) zu empfangen,

　　- aus den empfangenen Daten, einen Authentifizierungskode (CA') zu generieren, der Authentifizierungsbits umfasst, und
　　- eine Rückmeldung (ACK) zu generieren und zu senden,

**dadurch gekennzeichnet, dass** die Datenverarbeitungsmittel derart angeordnet sind, dass:

　　- sie den Authentifizierungskode (CA') derart generieren, dass er eine Länge größer, als die Länge der Unterschrift (S1) aufweist und versteckte Authentifizierungsbits umfasst, die nicht in der Unterschrift (S1) anwesend sind, und dass
　　- sie anhand der versteckten Authentifizierungsbits des Authentifizierungskodes (CA') die Rückmeldung (ACK) generieren, ohne einen neuen Authentifizierungskode zu generieren.

31. Vorrichtung nach Anspruch 30, bei dem die Datenverarbeitungsmittel derart angeordnet sind, dass sie alle versteckten Bits des Authentifizierungskodes (CA') in die Rückmeldung (ACK) einfügen.

32. Vorrichtung nach Anspruch 30, bei dem die Datenverarbeitungsmittel derart angeordnet sind, dass sie alle oder einen Teil der versteckten Bits des Authentifizierungskodes (CA') in die Rückmeldung (ACK) einfügen, und zwar in einer Reihenfolge, die ihrer anfänglichen Reihenfolge im Authentifizierungskode entspricht, oder in einer Reihenfolge, die in Bezug auf ihre anfängliche Reihenfolge umgekehrt ist.

33. Vorrichtung nach Anspruch 30, bei dem die Datenverarbeitungsmittel derart angeordnet sind, dass sie alle oder einen Teil der versteckten Bits in die Rückmeldung (ACK) einfügen, und zwar in einer in Bezug auf ihre anfängliche Reihenfolge im Authentifizierungskode (CA') verschachtelten, durch eine Verschachtelungsfunktion bestimmten Reihenfolge.

34. Vorrichtung nach einem der Ansprüche 30 bis 33, bei dem die Datenverarbeitungsmittel derart angeordnet sind, dass sie einen Teil der in der Unterschrift (S1) vorhandenen Authentifizierungsbits auch in die Rückmeldung (ACK) einfügen.

35. Vorrichtung nach einem der Ansprüche 30 bis 34, bei dem die Datenverarbeitungsmittel derart angeordnet sind, dass sie den Authentifizierungskode (CA') aus den empfangenen Daten und wenigstens einem geheimen Sitzungsschlüssel (SK) generieren.

36. Vorrichtung nach einem der Ansprüche 30 bis 35, bei dem die Datenverarbeitungsmittel derart angeordnet sind, dass sie anhand des Authentifizierungskodes (CA') die Authentizität der empfangenen Unterschrift (S1) prüfen.

**37.** Ein System zum Übertragen von Daten zwischen einem Punkt A (D2) und einem Punkt B (M2), der Datenverarbeitungs- und Kommunikationsmittel (REG1-REG3, LCMP, CRCT1, UC1, MP1, ICT1, CRCT2, UC2, MP2, ICT2) umfasst, um:

- aus zu übertragenden Daten (MESS, ID, DT) einen ersten, Autheritifizierungsbits umfassenden Authentifizierungskode (CA) am Punkt A zu generieren,
- die Daten und eine Authentifizierungsbits des Authentifizierungskodes (CA) umfassende Unterschrift (S1) von Punkt A nach Punkt B zu übertragen,
- aus den empfangenen Daten, einen zweiten Authentifizierungskode (CA') am Punkt B zu generieren, der vermutlich mit dem ersten identisch ist,
- eine Rückmeldung (ACK) am Punkt B zu generieren,
- die Rückmeldung (ACK) von Punkt B nach Punkt A zu übertragen, und
- die Authentizität der empfangenen Rückmeldung (ACK) am Punkt A zu prüfen,

**dadurch gekennzeichnet, dass** die Datenverarbeitungsmittel derart angeordnet sind, dass:

- sie den ersten Authentifizierungskode (CA) am Punkt A derart generieren, dass die Länge des ersten Authentifizierungskodes (CA) größer ist, als die Länge der Unterschrift (S1), wobei der erste Authentifizierungskode versteckte Authentifizierungsbits umfasst, die nicht in die Unterschrift (S1) eingefügt sind,
- sie den zweiten Authentifizierungskode (CA') derart generieren, dass der zweite Authentifizierungskode auch versteckte Bits aufweist, die vermutlich mit den versteckten Bits des ersten Authentifizierungskodes (CA) identisch sind,
- sie anhand von versteckten Authentifizierungsbits des zweiten Authentifizierungskodes (CA') die Rückmeldung (ACK) generieren, und dass
- sie die Authentizität der Rückmeldung (ACK) am Punkt A bestimmen, indem geprüft wird, dass sich versteckte Authentifizierungsbits des ersten Authentifizierungskodes (CA) in der Rückmeldung befinden.

**38.** System nach Anspruch 37, bei dem die Datenverarbeitungsmittel derart angeordnet sind, dass:

- sie alle versteckten Bits des zweiten Authentifizierungskodes (CA') in die Rückmeldung (ACK) einfügen, und dass
- sie die Authentizität der Rückmeldung (ACK) am Punkt A bestimmen, indem geprüft wird, dass sich alle versteckten Bits des ersten Authentifizierungskodes (CA) in der Rückmeldung befinden.

**39.** System nach Anspruch 37, bei dem die Datenverarbeitungsmittel derart angeordnet sind, dass:

- sie alle oder einen Teil der versteckten Bits des zweiten Authentifizierungskodes (CA') in die Rückmeldung (ACK) einfügen, und zwar in einer Reihenfolge, die ihrer anfänglichen Reihenfolge im zweiten Authentifizierungskode entspricht, oder in einer Reihenfolge, die in Bezug auf ihre anfängliche Reihenfolge umgekehrt ist, und dass
- sie die Authentizität der Rückmeldung (ACK) am Punkt A bestimmen, indem geprüft wird, dass sich versteckte Bits des ersten Authentifizierungskodes (CA) in der Rückmeldung befinden (ACK), in einer Reihenfolge, die ihrer anfänglichen Reihenfolge im ersten Authentifizierungskodes entspricht, oder in einer Reihenfolge, die in Bezug auf ihre anfängliche Reihenfolge umgekehrt ist.

**40.** System nach Anspruch 37, bei dem die Datenverarbeitungsmittel derart angeordnet sind, dass:

- sie alle oder einen Teil der versteckten Bits des zweiten Authentifizierungskodes (CA') in die Rückmeldung (ACK) einfügen, und zwar in einer in Bezug auf ihre anfängliche Reihenfolge im zweiten Authentifizierungskode verschachtelten, durch eine Verschachtelungsfunktion bestimmten Reihenfolge, und dass
- sie die Authentizität der Rückmeldung (ACK) am Punkt A bestimmen, indem geprüft wird, dass sich alle oder ein Teil der versteckten Bits des ersten Authentifizierungskodes (CA) in der Rückmeldung befinden (ACK), und zwar in einer in Bezug auf ihre anfängliche Reihenfolge im ersten Authentifizierungskode verschachtelten, durch die genannte Verschachtelungsfunktion bestimmten Reihenfolge.

**41.** System nach einem der Ansprüche 37 bis 40, bei dem die Datenverarbeitungsmittel derart angeordnet sind, dass:

- sie einen Teil der in der Unterschrift (S1) vorhandenen Authentifizierungsbits auch in die Rückmeldung (ACK) einfügen, und dass
- sie die Authentizität der Rückmeldung (ACK) bestimmen, indem auch geprüft wird, dass sich die Authentifizierungsbits der Unterschrift (S1) in der Rückmeldung befinden.

**42.** System nach einem der Ansprüche 37 bis 41, bei dem die Datenverarbeitungsmittel derart angeordnet sind, dass sie die Unterschrift (S1) aus den zu übertragenden Daten (MESS, ID, DT) und wenigstens einem geheimen am Punkt A und am Punkt B bekannten Sitzungsschlüssel (SK) generieren.

**43.** System nach einem der Ansprüche 37 bis 42, bei dem die Datenverarbeitungsmittel derart angeordnet sind, dass sie anhand des zweiten Authentifizierungskodes (CA') die Authentizität der am Punkt B empfangenen Unterschrift (S1) prüfen.

**44.** System nach einem der Ansprüche 37 bis 43, bei dem die Datenverarbeitungsmittel derart angeordnet sind, dass:

> - sie anhand der versteckten Authentifizierungsbits des ersten Authentifizierungskodes (CA) eine interne Rückmeldung (ACK') am Punkt A generieren, und dass
> - sie die Authentizität der empfangenen Rückmeldung (ACK) durch einen Vergleich derselben mit der internen Rückmeldung (ACK') am Punkt A bestimmen.

**D1**

| S1=FKs(MESS,SK) | MESS |
|---|---|

FKs

RGEN

**M1**

FKs

RGEN

| ACK | S2=FKs(ACK,SK) |
|---|---|

**Fig. 1**

**D1**

Message MESS à envoyer

Produire S1 = FKs(MESS,SK) — (S10)

(S11) — Envoyer MESS, S1

**M1**

Recevoir MESS, S1 — (S20)

Produire S1'=FKs(MESS,SK) — (S21)

Comparer S1' et S1 — (S22)

Erreur

Produire S2=FKs(ACK,SK) — (S23)

(S12) — Recevoir ACK, S2

Émettre S2=FKs(ACK,SK) — (S24)

(S13) — Produire S2'=FKs(ACK,SK)

Comparer S2 et S2' — (S14)

Erreur

Fin d'émission données MESS

**Fig. 2**

EP 1 914 926 B1

**Fig. 3**

Cloud (D2): 
CA=FKs(MESS,SK)
S1=$1(CA)
ACK'= $2(CA)

Cloud (M2):
CA'=FKs(MESS,SK)
S1'= $1(CA')
ACK=$2(CA')

D2 — FKs — RGEN

M2 — FKs — RGEN

S1 | MESS

ACK

**Fig. 3**

---

D2

M2

Message MESS à envoyer

Produire CA = FKs(MESS,SK) (S30)

Produire S1= $1(CA) (bits apparents) (S31)

Envoyer MESS, S1 (S32)

Recevoir ACK (S33)

Produire ACK'= $2(CA) (bits cachés) (S34)

Comparer ACK et ACK' (S35)

Erreur

Fin d'émission données MESS

Recevoir MESS, S1 (S40)

Produire CA'=FKs(MESS,SK) (S41)

Produire S1'= $1(CA') (bits apparents) (S42)

Comparer S1' et S1 (S43)

Erreur

Produire ACK= $2(CA') (bits cachés) (S44)

Envoyer ACK (S45)

**Fig. 4**

25

**Fig. 5**

**Fig. 6**

**EP 1 914 926 B1**

## RÉFÉRENCES CITÉES DANS LA DESCRIPTION

**Documents brevets cités dans la description**

- US 2002174332 A